# EUROPÄISCHE PATENTSCHRIFT

(11) **EP 3 759 502 B1**
(45) Veröffentlichungstag und Bekanntmachung des Hinweises auf die Patenterteilung: **25.09.2024**
(21) Anmeldenummer: 19706706.9
(22) Anmeldetag: 27.02.2019
(51) Int. Cl.: G01N 35/10, B25J 9/16

(54) **MESSAPPARAT FÜR EINEN LABORAUTOMATEN ZUR MESSUNG EINES GEGENSTANDS, GEGENSTAND FÜR DIESEN MESSAPPARAT UND MESSVERFAHREN**
MEASURING APPARATUS FOR LABORATORY ANALYSER FOR MEASUREMENT OF AN OBJECT, OBJECT FOR THIS MEASURING APPARATUS AND MEASURING METHOD
APPAREIL DE MESURE POUR UN APPAREIL AUTOMATIQUE DE LABORATOIRE DE MESURE D'UN OBJET, OBJET POUR LEDIT APPAREIL DE MESURE ET PROCÉDÉ DE MESURE

(30) Priorität: 27.02.2018 EP 18158943; 13.06.2018 EP 18177610
(43) Veröffentlichungstag der Anmeldung: 06.01.2021
(73) Patentinhaber: Eppendorf SE, 22339 Hamburg (DE)
(72) Erfinder: LAPCZYNA, Markus, 24568 Kaltenkirchen (DE); DUNKER, Uwe, 20253 Hamburg (DE); REICHMUTH, Burkhardt, 22041 Hamburg (DE); RADKE, Maik, 22339 Hamburg (DE)
(74) Vertreter: Ricker, Mathias
(86) Internationale Anmeldenummer: PCT/EP2019/054901
(87) Internationale Veröffentlichungsnummer: WO 2019/166512

(56) Entgegenhaltungen:
- EP-A1- 2 687 855
- WO-A1-2012/004555
- WO-A1-2012/069925

## Beschreibung

Die Erfindung bezieht sich auf einen Messapparat für einen Laborautomaten zur Messung eines vom Laborautomaten automatisiert bewegbaren Gegenstands, insbesondere eines Pipettierbehälters. Sie betrifft ferner den vom Laborautomaten automatisiert bewegbaren Gegenstand für die Verwendung in diesem Messapparat, insbesondere den Pipettierbehälter für die Verwendung in diesem Messapparat, und ein entsprechendes Messverfahren. Ein solcher Messapparat kann insbesondere Bestandteil eines Laborautomaten sein.

Laborautomaten werden verwendet, um in chemischen, biologischen, biochemischen, medizinischen oder forensischen Laboratorien Proben, insbesondere flüssige Proben mit hoher Effizienz zu bearbeiten. Sie werden auch als "Liquid-Handling"-Automaten bezeichnet. Laborautomaten automatisieren Behandlungsschritte, die sonst manuell durchgeführt werden müssten, und steigern auf diese Weise die Geschwindigkeit, Präzision und Zuverlässigkeit dieser Behandlungen.

Eine Behandlung einer flüssigen Laborprobe kann darauf gerichtet sein, diese Probe physikalisch, chemisch, biochemisch oder auf andere Weise in ihrer Zusammensetzung zu ändern. Durch eine Behandlung der Probe kann eine Probe z.B. geteilt oder verdünnt werden. Die Inhaltsstoffe einer Probe können analysiert werden oder es können, z.B. durch eine chemische Reaktion, neue Inhaltsstoffe hergestellt werden, insbesondere unter Verwendung der Probe. Insbesondere im Zusammenhang mit der Bearbeitung und Analyse von DNA oder RNA oder deren Bestandteilen sind Laborautomaten hilfreich, um eine Fülle von Informationen innerhalb einer geeigneten Zeitspanne zu gewinnen oder viele solcher Proben zu analysieren.

Laborautomaten weisen meist eine Arbeitsfläche mit Arbeitsstationen auf, an denen Proben in verschiedener Weise bearbeitet oder gelagert werden können. Für den Transport von z.B. flüssigen Proben zwischen verschiedenen Positionen, insbesondere Probenbehältern, dient meist eine programmgesteuerte Bewegungsvorrichtung in Verbindung mit einer Fluid-Transfer-Einrichtung, die z.B. ein Pipettiersystem aufweisen kann. Sowohl der Transport der Proben als auch deren Behandlung an den verschiedenen Stationen lässt sich programmgesteuert automatisieren.

Gewünscht ist insbesondere eine größtmögliche Präzision bei der automatisierten Dosierung der Laborproben. Beim Aufnehmen einer flüssigen Probe während eines im Laborautomaten programmgesteuert ablaufenden Prozesses werden Laborproben zunächst an einer ersten Arbeitsstation in den Pipettierbehälter eingesaugt. Der befüllte Pipettierbehälter wird zur gewünschten Zielposition befördert, wo die Abgabe der Laborprobe mit dem vorgegebenen Abgabevolumen erfolgt. Bei der Abgabe nach der Freistrahlmethode verlässt die Fluidprobe den Pipettierbehälter als Strahl oder freier Tropfen. Bei der Wandabgabe wird das Abgabevolumen an der Innenwand eines Probenbehältnisses abgestreift.

Die erfolgreiche Abgabe des Abgabevolumens setzt eine präzise Positionierung des Pipettierbehälters gegenüber dem Probenbehältnis voraus. Das gilt insbesondere bei einer hohen Flächendichte von nebeneinander angeordneten Probenkammern, wie dies bei Mikrotiterplatten der Fall ist. Je höher die Flächendichte, desto kleiner die Öffnungsdurchmesser der Probenkammern, und desto höher die Anforderungen an die Positioniergenauigkeit. Bei einer Wandabgabe ist ebenfalls eine besonders hohe Positioniergenauigkeit gefordert.

Bei den meisten bekannten Pipettiervorrichtungen werden herkömmliche Pipettierbehälter verwendet, die im Wesentlichen rotationssymmetrisch zu einer Achse ausgebildet sind, so dass der erste und zweite Endabschnitt koaxial angeordnet sind. Solche Pipettierbehälter geben bei vertikaler Anordnung im Freistrahl die Probe vertikal nach unten ab. Für die Wandabgabe ist es bekannt, den Pipettierbehälter durch Neigen von dessen Halteeinrichtung in eine schräge Position zu bringen, in der das Abstreifen des Abgabevolumens an der Innenwand des Probenbehältnisses vereinfacht wird.

Abhängig von der Geometrie und dem Material des Pipettierbehälters kommt es vor, dass Pipettierbehälter entweder bereits bei der Herstellung oder infolge von Lagerung und Umwelteinflüssen mehr oder weniger verformt werden. Das kann dazu führen, dass die Fluidaustauschöffnung des Pipettierbehälters nicht mehr koaxial angeordnet ist, so dass der Pipettierbehälter für eine präzise Flüssigkeitsabgabe nicht mehr ohne weiteres verwendbar ist und verworfen werden muss. Es ist zudem in vielen Anwendungen, die mit sehr wertvollen Proben hantieren, besonders wünschenswert, die korrekte bzw. den Anforderungen entsprechende Beschaffenheit des Pipettierbehälters vor -oder während- der Verwendung zu verifizieren.

Gemäß dem Dokument US 9,678,094 B2 ist es möglich, die Geometrie von Pipettennadeln durch Vermessung obligatorisch zu prüfen, um gegebenenfalls die Position der Pipettennadel-Halterung zum Berücksichtigen einer Biegung der Pipettennadel anzupassen. Da eine einzelne Geometrievermessung eines Pipettierbehälters aber relativ aufwändig ist, führt der genannte Ansatz zu einer deutlichen Verzögerung der Arbeitsprozesse in einem Laborautomaten.

Nicht nur die Lage von Pipettierbehältern sollte in Laborautomaten eindeutig definiert sein, generell sollte die Lage aller beweglichen Gegenstände, die vom Laborautomaten in automatisierten Prozessen angesteuert und bewegt werden, genau erfassbar und definiert sein. Beispielsweise kann vom automatisiert bewegbaren Werkzeugkopf eines Laborautomaten ein Stangenelement getragen werden, das zur Ausrichtung anderer Objekte im Arbeitsbereich des Laborautomaten verwendet werden soll und dessen Ausrichtung deshalb genau definierbar sein soll. Weiterhin kann auch ein Pippettierbehälter zur Ausrichtung anderer Objekte im Arbeitsbereich des Laborautomaten verwendet werden. EP 2 934 821 A1 beschreibt ein automatisiertes Ausrichtungssystem eines Laborroboters, bei dem ein Lasermesswerkzeug von einem auszurichtenden Roboterarm gegriffen wird und die Ausrichtung des Roboterarms durch Lasermessung an Markierungen der Arbeitsumgebung erfolgt. WO 2012/069925 A1 offenbart den Oberbegriff von Anspruch 1.

Aufgabe der vorliegenden Erfindung ist es, eine Lösung bereitzustellen, mit der ein kosteneffizientes, zuverlässiges und präzises automatisiertes Betreiben eines Laborautomaten ermöglicht wird.

Die Erfindung löst diese Aufgabe durch den Messapparat gemäß Anspruch 1, und das Verfahren nach Anspruch 9. Bevorzugte Ausgestaltungen sind insbesondere Gegenstände der Unteransprüche.

Die erfindungsgemäße Lösung beinhaltet einen Messapparat zur Erfassung der Relativposition eines Endabschnitts eines Gegenstands, insbesondere eines Pipettierbehälters, der einen Messhilfsabschnitt aufweist.

Der Messapparat weist vorzugsweise auf:
- eine Halteeinrichtung zum Halten eines Gegenstands, insbesondere eines Pipettierbehälterswelcher der Aufnahme einer fluiden Laborprobe mittels Ansaugen in den Pipettierbehälter und/oder der Abgabe der fluiden Laborprobe dient, der einen Gegenstandskörper, insbesondere einen röhrenförmigen Behälterkörper, mit einem ersten Endabschnitt und einem zweiten Endabschnitt aufweist, wobei der erste Endabschnitt zur Verbindung des Gegenstands, insbesondere des Pipettierbehälters, mit der Halteeinrichtung eingerichtet ist und einen Messhilfsabschnitt aufweist, und wobei der zweite Endabschnitt einen Endbereich, insbesondere einen Mündungsbereich mit einer Fluidaustauschöffnung, aufweist,
   eine elektronische Steuereinrichtung mit einer Prozessoreinrichtung zur Datenverarbeitung und mit einer Datenspeichereinrichtung zum Speichern von Daten,
- wobei der Messapparat eine erste Messeinrichtung aufweist, die zur Messung einer Lage, insbesondere einer Drehstellung, des Messhilfsabschnitts des Gegenstands, insbesondere des Pipettierbehälters, an der Halteeinrichtung eingerichtet ist, und eine zweite Messeinrichtung aufweist, die zur Messung der Position des Endbereichs des Gegenstands, insbesondere des Mündungsbereichs eines Pipettierbehälters, eingerichtet ist,
- und wobei der Messapparat dazu eingerichtet ist, die Position des Endbereichs, insbesondere des Mündungsbereichs, in Abhängigkeit von der Lage des Messhilfsabschnitts als Relativpositionsdaten in der Datenspeichereinrichtung zu speichern, so dass nachfolgend die Position des Endbereichs des Gegenstands, insbesondere des Mündungsbereichs des Pipettierbehälters, durch Messung der Lage des Messhilfsabschnitts und aus den Relativpositionsdaten ermittelbar ist.

Der erfindungsgemäße Messapparat macht sich die spezielle Gestaltung des Gegenstands, insbesondere des Pipettierbehälters zunutze, gemäß der sich die Lage des Gegenstands, insbesondere des Pipettierbehälters an der Halteeinrichtung eindeutig aus der Messung des Messhilfsabschnitts bestimmen lässt. Da eine solche Lagemessung (erste Messung) in der Praxis einfacher realisierbar ist als eine Geometriemessung (zweite Messung), ist es insgesamt mit weniger Aufwand verbunden, eine wiederholte Lagemessung in die Arbeitsabläufe der automatisierten Probenbehandlung zu implementieren als eine wiederholte Geometrievermessung. Die Geometriemessung ist lediglich einmal erforderlich, um für einen bestimmten Gegenstand, insbesondere Pipettierbehälter, die Relativposition der Endbereichs, insbesondere des Mündungsbereichs mit der Fluidaustauschöffnung bzw. des zweiten Endabschnitts in Bezug auf die Lage des Gegenstands, insbesondere des Pipettierbehälters, zu ermitteln. Die Lage des Endbereichs ist insbesondere die Relativposition des Endbereichs in Bezug auf eine Position des Messhilfsabschnitts. Wird der so vermessene Gegenstand, insbesondere Pipettierbehälter, nachfolgend wiederverwendet, kann mittels einer einfachen Lagemessung und der verfügbaren Information über die Relativposition die absolute Position des Endbereichs, insbesondere der Fluidaustauschöffnung bzw. des zweiten Endabschnitts in Bezug auf die Halteeinrichtung oder andere Bezugspunkte ermittelt werden. Anzumerken ist, dass bei einer Verwendung des Messapparats in einem Laborautomaten die Information über die individuelle Ablageposition eines Pipettierbehälters im Datenspeicher speicherbar ist, so dass auch nach einer zwischenzeitlichen Ablage des Gegenstands, insbesondere des Pipettierbehälters, dieser erneut gezielt angesteuert und mit der Halteeinrichtung verbunden werden kann und die gewünschte Information über die Position des Endbereichs mittels der einfachen Lagemessung in Kombination mit den für diesen Gegenstand, insbesondere Pipettierbehälter, gespeicherten Relativpositionsdaten gewonnen wird.

Eine Lagemessung lässt sich insbesondere deshalb einfach umsetzen, da der zu messende Gegenstand, insbesondere Pipettierbehälter, mit dem ersten Endabschnitt mit der Halteeinrichtung verbunden ist, an dem sich auch der Messhilfsabschnitt befindet. Die erste Messeinrichtung lässt sich deshalb insbesondere als Teil der Halteeinrichtung realisieren. Im Gegensatz dazu befindet sich der zweite Endabschnitt mit dem Endbereich bzw. Mündungsbereich in einer größeren Entfernung von der Halteeinrichtung als der erste Endabschnitt und sollte im Falle eines Pipettierbehälters möglichst auch nicht kontaktiert werden, um die Sterilität des Pipettierbehälters zu gewährleisten.

Die Erfindung wird nachfolgend in verschiedenen Passagen für die bevorzugte Ausführungsform der Erfindung erläutert, dass der vom Messapparat verwendete und gemessene Gegenstand ein Pipettierbehälter ist. Es ist aber auch bevorzugt, dass dieser Gegenstand ein anderer Gegenstand ist, der insbesondere vom Laborautomat in dessen Arbeitsbereich automatisiert bewegbar ist und zur Verwendung mit dem Messapparat eingerichtet ist. Beispielsweise kann der Gegenstand ein Stangenelement sein oder ein solches aufweisen, das beispielsweise zur Ausrichtung anderer Objekte im Arbeitsbereich des Laborautomaten verwendet werden soll und dessen Ausrichtung deshalb genau definierbar sein soll.

Der Messapparat kann ein unabhängig von einem Laborautomaten betreibbarer Apparat sein, er ist aber vorzugsweise in den Laborautomaten eingebaut oder als optionales Zubehörteil vom Hersteller in den Laborautomaten einbaubar.

Der Messapparat weist insbesondere eine Schnittstelle zur Datenübertragung auf, über die Daten mit der elektrischen Steuereinrichtung des Laborautomaten ausgetauscht werden können, die insbesondere auch die automatisierte Behandlung der Laborprobe(n) steuert. Messdaten aus der ersten und oder zweiten Messeinrichtung können so ausgetauscht werden.

Das betrifft insbesondere Daten (auch bezeichnet als Lagedaten) mit Informationen über die mittels der ersten Messeinrichtung gemessenen Lage des Pipettierbehälters bezüglich der Halteeinrichtung. Beispielsweise kann ein von der elektronischen Steuereinrichtung herangezogenes Koordinatensystem an der Halteeinrichtung fixiert sein, so dass sich dieses Koordinatensystem gegebenenfalls mit der Halteeinrichtung bewegt. Bei einem mit dem Messapparat versehenen Laborautomat kann das Koordinatensystem auch am Arbeitsbereich des Laborautomaten fixiert sein, wenn die elektrische Steuereinrichtung die genaue Relativlage der beweglichen Halteeinrichtung kennt, was in der Regel der Fall ist.

Zwischen Messapparat und Steuereinrichtung des Laborautomaten austauschbar sind zudem jene Daten (auch bezeichnet als Positionsdaten) mit Informationen über die mittels der zweiten Messeinrichtung gemessenen Position des Mündungsbereichs des Pipettierbehälters, die in Abhängigkeit von den auch gemessenen oder noch zu messenden Lagedaten gespeichert werden. Die Relativpositionsdaten können vom Messapparat ermittelt und gespeichert werden, oder die Steuereinrichtung des Laborautomaten (oder einer anderen geeigneten Vorrichtung, z.B. ein Computer) empfängt von dem Messapparat die Lagedaten und die Positionsdaten und ermittelt daraus die Relativpositionsdaten und speichert diese. Die Positionsdaten wurden insbesondere so gemessen, dass die Lage des Pipettierbehälters bzw. des unverrückbar mit dem Pipettierbehälter verbundenen Messhilfsabschnitts während der Messung unverändert ist oder in vorbestimmter und somit nachvollziehbarer Weise verändert wurde.

Die **erste Messeinrichtung** ist zur Messung einer Lage, insbesondere einer Drehstellung, des Messhilfsabschnitts des Pipettierbehälters an der Halteeinrichtung eingerichtet, Die Bedeutung des Messhilfsabschnitts liegt darin, dass er eine eindeutige Detektion der Lageänderung des Pipettierbehälters erst ermöglicht. Herkömmliche Pipettierbehälter weisen einen ersten Endabschnitt auf, der vollständig rotationssymmetrisch zur Längsachse des Pipettierbehälters gestaltet ist bzw. der gesamte Pipettierbehälter ist meist rotationssymmetrisch. Verlässt man sich darauf, dass ein rotationssymmetrischer Pipettierbehälter in axialer Richtung zuverlässig an der Halteeinrichtung anliegt, ist wegen der Rotationssymmetrie die Drehstellung nicht ermittelbar. Wie jeder Gegenstand weist ein rotationssymmetrischer Pipettierbehälter nach jeder Lageänderung, ein individuelle Ausrichtung bzw. Drehstellung auf; diese kann aber bei einem rotationssymmetrischen Gegenstand nicht erfasst werden. Der Messhilfsabschnitt dient dazu, die Rotationssymmetrie zu brechen und insbesondere eine eindeutige Lagebestimmung des Pipettierbehälters in Bezug auf ein festes Koordinatensystem zu ermöglichen, das insbesondere an der Halteeinrichtung oder im Arbeitsbereich eines Messapparats oder Laborbehälters fixiert sein kann.

Der Messhilfsabschnitt und die erste Messeinrichtung können so eingerichtet sein, dass nur die Drehstellung des Pipettierbehälters um dessen Längsachse an der Halteeinrichtung ermittelt wird. Die anderen Freiheitsgrade des Pipettierbehälters an der Halteeinrichtung werden als korrekt bestimmt vorausgesetzt - es wird insbesondere angenommen, dass der Pipettierbehälter in vorbestimmter Weise horizontal an einem Kontaktbereich der Halteeinrichtung anliegt und die Längsachse an der vorbestimmten Position angeordnet ist. Dies wird beispielsweise dadurch erreicht, dass der Pipettierbehälter einen Verbindungsabschnitt aufweist, z.B. einen um den Behälterkörper umlaufenden Flansch, der mit einem passenden Verbindungsabschnitt der Halteeinrichtung, z.B. einer Arretiervorrichtung, geeignet zusammenwirkt.

Der Messhilfsabschnitt und die erste Messeinrichtung können so eingerichtet sein, dass die vollständige Lage des Pipettierbehälters an der Halteeinrichtung ermittelt wird, dass also die komplette Raumposition des Pipettierbehälters aus der Gestaltung des Messhilfsabschnitts ermittelbar ist. Auf diese Weise können auch über die Drehstellung hinausgehende Lageabweichungen des Pipettierbehälters an der Halteeinrichtung erfasst werden.

Der Messhilfsabschnitt kann ein mechanisch abtastbares Höhenprofil sein, das am ersten Endabschnitt des Pipettierbehälters angeordnet ist und das in Richtung der Längsachse eine Höhenvariation aufweist, die insbesondere konzentrisch um die Längsachse verlaufen kann. Insbesondere wenn das Höhenprofil mit Bezug auf die Längsachse keine rotationssymmetrischen Formwiederholungen aufweist, z.B. ein kontinuierlich konzentrisch um die Längsachse verlaufendes sinusförmiges Profil, kann die Drehstellung des Pipettierbehälters bestimmt werden. Die Messung kann dann durch Erfassung des Höhenprofils mit einer in die Halteeinrichtung integrierten Abtastsensorik erfolgen, die dann einen Bestandteil der ersten Messeinrichtung bilden kann. Das Höhenprofil kann bei der Herstellung integral mit dem Pipettierbehälter gefertigt sein, insbesondere durch ein Spritzgussverfahren.

Der Messhilfsabschnitt kann zudem mindestens eine optisch detektierbare Markierung aufweisen, die durch eine Messung einer Reflexionsintensität, nach dem Lichtschrankenprinzip, durch eine Farbmessung oder eine bildgebende Messung der ersten Messeinrichtung auswertbar ist.

Der Messhilfsabschnitt kann zudem mindestens einen elektrisch leitfähigen Abschnitt aufweisen, der z.B. durch eine kapazitative Messung der ersten Messeinrichtung detektierbar ist.

Die **zweite Messeinrichtung** ist zur Messung der Position des Mündungsbereichs des Pipettierbehälters eingerichtet. Die zweite Messeinrichtung ist vorzugsweise dazu eingerichtet, die Position des Mündungsbereichs ohne mechanische Kontaktierung des Pipettierbehälters zu messen, also berührungsfrei. So wird eine Kontamination des Mündungsbereichs vermieden, was für die Verwendung in einem Laborautomaten wichtig ist. Für die berührungsfreie Messung kommt vor allem eine optische Messung in Betracht, Aber auch eine Vermessung mittels kapazitativer Messung, oder Ultraschallmessung kommt in Betracht.

Vorzugsweise weist die zweite Messeinrichtung mindestens eine Lichtquelle auf und mindestens einen optischen Sensor, die zur Messung der Position des Mündungsbereichs angeordnet sind oder anordenbar sind. Insbesondere können solche Bestandteile der zweiten Messeinrichtung und der Pipettierbehälter zur Durchführung einer vorbestimmten Relativbewegung angeordnet sein. Auf diese Weise kann der den Pipettierbehälter enthaltende Raumbereich optisch abgetastet werden, um die Position des Mündungsbereichs zu ermitteln.

In einer bevorzugten Ausführungsform weist eine zweite Messeinrichtung eine Lichtquelle auf, insbesondere eine LED, insbesondere Infrarot-LED, die das Licht zur Beleuchtung des Raumabschnitts bereitstellt, der zum Zweck der Messung den zweiten Endabschnitt bzw. den Mündungsbereich des Pipettierbehälters zumindest zeitweise enthält. Vorzugsweise wird das Licht gleichmäßig auf diesen Raumbereich gerichtet, insbesondere durch Bestrahlung mit kollimiertem Licht. Dieses wird insbesondere mittels Strahlführungsmaßnahmen, z.B. Linse(n), Spiegel(n) etc. so geführt, dass es aus zwei Richtungen durch den Raumabschnitt tritt und danach auf mindestens einen optischen Sensor fällt. Dieser kann insbesondere ein Zeilensensor sein, insbesondere ein CMOS-Zeilensensor. Um mittels des Zeilensensors die Position des Mündungsbereichs zu ermitteln, wird von der Steuereinrichtung die ortsaufgelöst detektierte Variation der Abschattung ausgewertet, die sich ergibt, wenn der zweite Endabschnitt mit vorbestimmter Bewegung -insbesondere mit konstanter Geschwindigkeit- in vorbestimmter Richtung - insbesondere in Richtung der Längsachse des ersten Endabschnitts bzw. in vertikaler Richtung- in dem Raumabschnitt bewegt wird. Da das Licht aus zwei Richtungen durch den Raumabschnitt fällt, ergeben sich zunächst zwei getrennte Schatten, wenn der Pipettierbehälter im Raumabschnitt angeordnet ist. Wird der Pipettierbehälter aus dem Raumabschnitt herausbewegt, verändert sich die Lage der Abschattungen auf dem Zeilensensor, woraus in Kombination mit der bekannten Messgeometrie mittels herkömmlicher Überlegungen zur Projektion und Koordinatentransformation auf die Position des Mündungsbereichs mit dem Bezugspunkt an der Halteeinrichtung geschlossen werden kann. Wenn die Halteeinrichtung als Bestandteil eines Laborautomaten ohnehin beweglich ausgeführt ist, ist eine solche Lösung besonders effizient.

Die zweite Messeinrichtung ist vorzugsweise dazu eingerichtet, aus zwei unterschiedlichen Richtungen jeweils mindestens eine optische Messung durchzuführen. Diese optische Messung kann insbesondere die Erfassung eines Abbilds des Mündungsbereichs vorsehen. Dazu kann die zweite Messeinrichtung einen oder zwei Bildsensoren aufweisen, oder weitere Bildsensoren. Die Bildsensoren sind vorzugsweise parallel zur Längsachse des ersten Endabschnitts des Pipettierbehälters angeordnet.

Die zweite Messeinrichtung und die Halteeinrichtung sind vorzugsweise beweglich zueinander angeordnet. Dadurch kann insbesondere ein mit der Halteeinrichtung verbundener Pipettierbehälter bedarfsweise an der zweiten Messeinrichtung positioniert werden, um die Positionsmessung durchzuführen. Ist der Messapparat im Arbeitsbereich eines Laborautomaten stationär angeordnet, kann die Halteeinrichtung zur Position des Messapparats bewegt werden, um die Positionsmessung durchzuführen.

Die dafür erforderliche Zeit kann optimal reduziert werden, wenn die zweite Messeinrichtung in einer bevorzugten Ausführungsform beweglich an der Halteeinrichtung angeordnet ist. Auch in diesem Fall kann die zweite Messeinrichtung bedarfsweise zum Pipettierbehälter bewegt werden, aber der erforderliche Wegstrecke der Bewegung ist verkürzt. Wird die Halteeinrichtung bewegt, so wird in gleicher Weise auch die zweite Messeinrichtung bewegt, so dass die Wegstrecke nicht -wie im erstgenannten Fall- von der Position der Halteeinrichtung im Arbeitsbereich abhängt.

Die Erfindung betrifft zudem den vom erfindungsgemäßen Messapparat verwendbaren Gegenstand, der insbesondere ein Pipettierbehälter zur Aufnahme und/oder der Abgabe einer fluiden Laborprobe ist. Dieser Gegenstand wirkt zumindest über den Messhilfsabschnitt speziell mit dem erfindungsgemäßen Messapparat zusammen.

Der erfindungsgemäße Gegenstand, insbesondere Pipettierbehälter, weist einen Gegenstandskörper, insbesondere einen röhrenförmigen Behälterkörper, auf, der einen ersten und einen zweiten Endabschnitt aufweist, wobei der erste Endabschnitt zur Verbindung des Gegenstands, insbesondere Pipettierbehälters, mit der Halteeinrichtung des erfindungsgemäßen Messapparats eingerichtet ist und einen Messhilfsabschnitt aufweist, wobei sich zumindest ein Abschnitt Gegenstandskörpers, insbesondere des röhrenförmigen Behälterkörpers, entlang einer Längsachse A erstreckt, insbesondere sich der erste Endabschnitt entlang dieser Längsachse A erstreckt,
wobei der erste Endabschnitt einen Messhilfsabschnitt aufweist, der so eingerichtet ist, dass dessen Lagemessung bezüglich dieser Halteeinrichtung die Bestimmung der Lage des Gegenstands, insbesondere Pipettierbehälters, bezüglich dieser Halteeinrichtung ermöglicht, und
wobei der zweite Endabschnitt einen Endbereich, insbesondere einen Mündungsbereich mit einer Fluidaustauschöffnung, aufweist, der in einer Relativposition zu diesem Messhilfsabschnitt angeordnet ist.

In einer ersten bevorzugten Ausführungsform ist der Gegenstands, insbesondere Pipettierbehälter so geformt, dass die Längsachse zentral durch den zweiten Endabschnitt und den Endbereich bzw. Mündungsbereich verläuft und dass insbesondere der erste und zweite Endabschnitt koaxial angeordnet sind. Ein solcher Pipettierbehälter eignet sich insbesondere für die Probenabgabe gemäß dem Freistrahlprinzip, insbesondere in Richtung vertikal nach unten, also in Richtung der Gravitation.

In einer zweiten bevorzugten Ausführungsform ist der Gegenstand, insbesondere Pipettierbehälter, so geformt, dass der Mündungsbereich mit einem senkrechten Abstand d>0 zu der Längsachse angeordnet ist. Durch diesen Versatz d>0 eignet sich ein solcher Pipettierbehälter insbesondere für die Wandabgabe der Probe, wobei die genaue Wahl von d abhängt von der gewünschten Verwendung des Pipettierbehälters, insbesondere von dem Durchmesser des Probenbehälters, an dem eine Wandabgabe erfolgen soll. Der Mündungsbereich ist in diesem Fall insbesondere so angeordnet, dass eine Längsachse durch die Fluidaustauschöffnung und den Mündungsbereich, insbesondere auch durch den gesamten zweiten Endabschnitt, in Richtung schräg vertikal nach unten verläuft, also in einem Winkel α>0° zur Längsachse, wobei vorzugsweise 0°< α<80°, vorzugsweise 0,5°< α<60°, vorzugsweise 1°< α<45°. Auch die Wahl dieses Winkels hängt von der gewünschten Verwendung des Pipettierbehälters ab.

Der Messhilfsabschnitt ist in vorbestimmter Weise, die der Steuereinrichtung bekannt ist, so unveränderbar am Pipettierbehälter angeordnet, dass aus der Lagemessung der Lage des Messhilfsabschnitts eindeutig die Lage des Pipettierbehälters bekannt ist. Der Messhilfsabschnitt kann integral mit dem Pipettierbehälter ausgebildet sein. Er kann aber auch nachträglich mit dem Pipettierbehälter verbunden sein, z.B. durch eine kraftschlüssige und/oder formschlüssige und/oder stoffschlüssige Verbindung, z.B. durch Verkleben mit dem Pipettierbehälter. Der Messhilfsabschnitt kann auch gebildet sein, indem der Pipettierbehälter nachträglich modifiziert wird, z.B. durch Einprägen, Ausfräsen oder sonstiges Aufbringen eines Höhenprofils, auch durch Aufdrucken oder Bekleben. Die nachträgliche Modifizierung kann auch ein Bedrucken mit einer visuell erkennbaren und auswertbaren Kennzeichnung erfolgen, Bedrucken oder Bekleben oder sonstiges Aufbringen einer visuell erkennbaren Struktur - z.B. durch thermische Behandlung.

Die Erfindung wird zudem definiert durch ein System zur Erfassung der Relativposition eines Endabschnitts eines Gegenstands, insbesondere Pipettierbehälters, wobei das erfindungsgemäße System aufweist:
- einen Gegenstands, insbesondere Pipettierbehälter, aufweisend einen Gegenstandskörper, insbesondere röhrenförmigen Behälterkörper, der einen ersten und einen zweiten Endabschnitt aufweist, wobei der erste Endabschnitt zur Verbindung des Gegenstands, insbesondere Pipettierbehälters, mit der Halteeinrichtung des erfindungsgemäßen Messapparats eingerichtet ist und einen Messhilfsabschnitt aufweist, wobei sich zumindest ein Abschnitt des Gegenstandskörpers, insbesondere des röhrenförmigen Behälterkörpers, entlang einer Längsachse erstreckt, insbesondere der erste Endabschnitt sich entlang einer Längsachse erstreckt, wobei der erste Endabschnitt einen Messhilfsabschnitt aufweist, der so eingerichtet ist, dass dessen Lagemessung bezüglich dieser Halteeinrichtung die Bestimmung der Lage des Gegenstands, insbesondere Pipettierbehälters, bezüglich dieser Halteeinrichtung ermöglicht, und wobei der zweite Endabschnitt einen Endbereich, insbesondere einen Mündungsbereich mit einer Fluidaustauschöffnung, aufweist, der in einer Relativposition zu diesem Messhilfsabschnitt angeordnet ist;
- und einen Messapparat, aufweisend eine Halteeinrichtung zum Halten des Gegenstands, insbesondere Pipettierbehälters, eine elektronische Steuereinrichtung mit einer Prozessoreinrichtung zur Datenverarbeitung und mit einer Datenspeichereinrichtung zum Speichern von Daten, wobei der Messapparat eine erste Messeinrichtung aufweist, die zur Messung einer Lage, insbesondere einer Drehstellung, des Messhilfsabschnitts des Gegenstands, insbesondere Pipettierbehälters, an der Halteeinrichtung eingerichtet ist, und eine zweite Messeinrichtung aufweist, die zur Messung der Position des Endbereichs bzw. Mündungsbereichs des Gegenstands, insbesondere Pipettierbehälters, eingerichtet ist, und wobei der Messapparat dazu eingerichtet ist, die Position des Endbereichs, insbesondere des Mündungsbereichs, in Abhängigkeit von der Lage des Messhilfsabschnitts als Relativpositionsdaten in der Datenspeichereinrichtung zu speichern, so dass nachfolgend die Position des Mündungsbereichs des Gegenstands, insbesondere Pipettierbehälters, durch Messung der Lage des Messhilfsabschnitts und aus den Relativpositionsdaten ermittelbar ist.

Weitere Merkmale des erfindungsgemäßen Systems ergeben sich aus der Beschreibung des erfindungsgemäßen Messapparats, des Laborautomaten und des erfindungsgemäßen Verfahrens.

Die Erfindung betrifft zudem ein Verfahren zur Erfassung der Relativposition eines Mündungsbereichs eines Gegenstands, insbesondere Pipettierbehälters, welcher der Aufnahme mittels Ansaugen und/oder der Abgabe einer fluiden Laborprobe dient, der einen Gegenstandskörper, insbesondere einen röhrenförmigen Behälterkörper, mit einem ersten und einem zweiten Endabschnitt aufweist, wobei der erste Endabschnitt zur Verbindung des Gegenstands, insbesondere Pipettierbehälters, mit einer Halteeinrichtung eingerichtet ist und einen Messhilfsabschnitt aufweist, wobei der zweite Endabschnitt einen Endbereich, insbesondere einen Mündungsbereich mit einer Fluidaustauschöffnung, aufweist, aufweisend die Schritte
- Messen einer Lage, insbesondere einer Drehstellung, des Messhilfsabschnitts des an einer Halteeinrichtung angeordneten Gegenstands, insbesondere Pipettierbehälters, mittels einer ersten Messeinrichtung; (201)
- Messen der Position des Endbereichs bzw. Mündungsbereichs des an der Halteeinrichtung angeordneten Gegenstands, insbesondere Pipettierbehälters, mittels einer zweiten Messeinrichtung; (202)
- Speichern der Position des Endbereichs bzw. Mündungsbereichs in Abhängigkeit von der Lage des Messhilfsabschnitts als Relativpositionsdaten in einer Datenspeichereinrichtung, so dass nachfolgend die Position des Endbereichs bzw. Mündungsbereichs des Pipettierbehälters durch Messung der Lage seines Messhilfsabschnitts und aus den Relativpositionsdaten ermittelbar ist. (203)

Die Messung der Lage des Messhilfsabschnitts und die Messung der Position des Endbereichs können gleichzeitig, oder sequentiell, oder wiederholt und in beliebiger Reihenfolge erfolgen.

Vorzugsweise weist das erfindungsgemäße Messverfahren mindestens einen der nachfolgend genannten Schritte auf:
- Ablegen des vermessenen Gegenstands, insbesondere Pipettierbehälters, (50; 50') in einer Lagerposition; (204)
- Erneutes Ergreifen des vermessenen Gegenstands, insbesondere Pipettierbehälters (50; 50'), aus der Lagerposition und Verbinden des Gegenstands, insbesondere Pipettierbehälters, mit der Halteeinrichtung in einer aktuellen Lage, die von der Lage des Gegenstands, insbesondere Pipettierbehälters, bei dessen Vermessung abweicht, so dass auch die Position des Endbereichs bzw. Mündungsbereichs von der Position bei dessen Messung abweicht; (205)
- Messen der aktuellen Lage des vermessenen Gegenstands, insbesondere Pipettierbehälters (50; 50'), durch Messung der Lage seines Messhilfsabschnitts (54; 54') gegenüber der Halteeinrichtung; (206)
- Ermitteln der Position des Endbereichs bzw. Mündungsbereichs des vermessenen Gegenstands, insbesondere Pipettierbehälters, aus der aktuellen Lage seines Messhilfsabschnitts und aus den gespeicherten Relativpositionsdaten. (207)

Weitere Merkmale des erfindungsgemäßen Verfahrens ergeben sich aus der Beschreibung des erfindungsgemäßen Laborautomaten.

Eine **Laborprobe** ist eine Probe, die in einem Labor behandelt werden kann. Anstelle des Begriffs Laborprobe wird bei der Beschreibung der Erfindung auch der Begriff "Probe" verwendet. Die Probe ist ein Fluid und kann flüssig, gelartig, pulverförmig sein, oder solche Phasen aufweisen. Die Probe kann ein Gemisch aus solchen Phasen sein, insbesondere ein Flüssigkeitsgemisch, eine Lösung, eine Suspension, z.B. eine Zellsuspension, eine Emulsion oder Dispersion. Eine flüssige Probe kann eine solche sein, die üblicherweise in einem biologischen, chemischen, medizinischen Labor gehandhabt wird. Eine flüssige Probe kann eine Analysenprobe sein, ein Reagenz, ein Medium, ein Puffer etc..

Die Erfindung betriff zudem einen **Laborautomat** zur programmgesteuerten Behandlung von mindestens einer fluiden Laborprobe, der den erfindungsgemäßen Messapparat aufweist. Die Steuereinrichtung des Messapparats kann in diesem Fall insbesondere identisch sein mit der Steuereinrichtung des Laborautomaten, die mittels eines Steuerprogramms die programmgesteuerte Behandlung der mindestens einen fluiden Laborprobe durchführt. Die beiden Steuereinrichtungen können aber auch getrennt sein und können insbesondere für den Datenaustausch eingerichtet sein, so dass einerseits der Laborautomat an der Steuerung des Messapparats und/oder der Durchführung der ersten und/oder zweiten Messung beteiligt sein kann bzw. diese steuern kann, und andererseits der Messapparat die Messdaten, insbesondere Daten über die erste oder zweite Messung, insbesondere die Relativpositionsdaten, an die Steuereinrichtung des Laborautomaten übersenden kann. Die Halteeinrichtung des Messapparats kann ferner in diesem Fall insbesondere identisch sein mit der Halteeinrichtung des Laborautomaten, es können aber auch unterschiedliche Halteeinrichtungen sein.

Die elektrische Steuereinrichtung des Laborautomaten weist insbesondere eine elektronische Datenverarbeitungseinrichtung auf, insbesondere eine CPU oder einen Mikroprozessor, sowie mindestens eine Datenspeichereinrichtung. Die Steuereinrichtung kann programmgesteuert sein, insbesondere mittels Programmparametern, um die automatisierte Steuerung der Probenbehandlung und vorzugsweise auch die Ermittlung der Relativpositionsdaten in Abhängigkeit von den Lagemessdaten eines Pipettierbehälters zu bestimmen.

Die Steuereinrichtung ist vorzugsweise dazu eingerichtet, das erfindungsgemäße Messverfahren auszuführen.

Die Steuereinrichtung ist vorzugsweise dazu eingerichtet, zur Messung der Position des Mündungsbereichs des Pipettierbehälters die Bewegung der Halteeinrichtung in Bezug auf die zweite Messeinrichtung bzw. in Bezug auf deren Sensor zu steuern.

Die Steuereinrichtung ist vorzugsweise dazu eingerichtet, zur Messung der Position des Mündungsbereichs des Pipettierbehälters die Bewegung der zweiten Messeinrichtung in Bezug auf die Halteeinrichtung zu steuern.

Die **Behandlung** einer Laborprobe(n) kann einen oder mehrere der nachfolgend genannten Vorgänge, insbesondere gleichzeitig oder nacheinander, beinhalten:
- Transport der Laborprobe, insbesondere durch eine Transporteinrichtung, unter Wirkung der Gravitation und/oder einer durch den Laborautomaten bewirkten Kraft;
- berührungslose (nicht-invasive) physikalische Behandlung der Probe, insbesondere thermische Behandlung, insbesondere Erwärmen und/oder Kühlen, insbesondere geregeltes Temperieren der Probe; oder Gefrieren oder Auftauen der Probe, oder sonstiges thermisches Herbeiführen einer Phasenänderung der Probe, z.B. Verdampfen, Kondensieren etc; magnetische Behandlung der Probe; optische Behandlung der Probe, insbesondere Bestrahlen der Probe mit Strahlung, insbesondere Licht, insbesondere sichtbare Licht. Infrarotlicht oder UV-Licht, oder Detektion von solcher Strahlung, insbesondere Fluoreszenzlicht, aus dieser Probe; magnetische Behandlung einer Probe mit magnetischen Bestandteilen, insbesondere magnetische Separation von magnetischen Bestandteilen, insbesondere "magnetic beads", von einer fluiden Phase der Probe; Bewegen der Probe, also Durchführen einer mechanischen Behandlung der Probe, insbesondere Schütteln, rotieren, oszillieren, vibrieren, zentrifugieren, akustische Behandlung, insbesondere mit Ultraschall, jeweils z.B. zum Zwecke des Mischens der Probe oder des Separierens von Bestandteilen innerhalb der Probe oder zum Transportieren der magnetischen Bestanteile aus der Probe heraus oder in die Probe hinein;

- invasive physikalische Behandlung der Probe, also Durchführen einer mechanischen Behandlung der Probe: Einbringen von Rührwerkzeug, z.B. Rührstab oder magnetischer Rührfisch in die Probe und Rühren, Einbringen einer Sonode für akustische oder Ultraschalbehandlung, Einbringen von Transportmitteln, insbesondere Pipettierbehältern in die Probe, z.B. Dispenserspitze oder Pipettenspitze, oder Hohlnadel oder Schlauch; Zugabe von anderen Hilfsmitteln in die Probe;
- chemische, biochemische oder biomedizinische Behandlung der Probe: Zugabe von chemischen (z.B. Reaktant, Reagenz, Solvens, Solut) biochemischen (z.B. biochemische Makromoleküle, z.B. DNA, DNA-Bestandteile; pharmazeutische Wirkstoffe), oder biomedizinischen (Blut, Serum, Zellmedium) Stoffen;
- Lagerung der Probe, insbesondere für einen programmgesteuert definierten Zeitraum, insbesondere unter bestimmten physikalische Bedingungen, z.B. bei bestimmter Temperatur, Temperaturen, oder Temperaturwechseln, insbesondere wiederholten Temperaturwechseln, z.B. zyklisch und/oder periodisch wiederholten Temperaturwechseln, und/oder Einstellen eines Umgebungsdruck, z.B. Anlegen eines Überdrucks oder eines Unterdrucks, insbesondere eines Vakuums, und/oder Einstellen einer definierten Umgebungsatmosphäre, z.B. ein Schutzgas oder eine bestimmte Luftfeuchtigkeit, unter bestimmten Strahlungsbedingungen, z.B. abgeschirmt gegen sichtbares Licht, im Dunkeln, oder unter definierter Bestrahlung;
- Messung oder Analyse der Probe, insbesondere Analyse durch eine nicht-invasive und/oder invasive Behandlung der Probe, insbesondere um mindestens eine oder mehrere chemische, physikalische, biochemische und/oder medizinische Eigenschaften der Probe zu messen; insbesondere Zählen von Zellen mittels Cell-Counter;
- Bearbeitung der Probe, insbesondere Änderungen mindestens einer Eigenschaft der Probe, insbesondere mittels nicht-invasiver und/oder invasiver Behandlung der Probe.

Der Laborautomat kann so eingerichtet sein, dass damit weitere Behandlungsarten durchgeführt werden können. Dies kann dadurch geschehen, dass die dafür notwendigen Dateien und/oder Programme oder Programmbestandteile, insbesondere ein der Behandlungsart zugeordnetes Programmmodul, nachträglich in den Laborautomaten, insbesondere dessen Datenspeichereinrichtung, übertragen werden.

Eine Behandlung der Laborprobe kann insbesondere dienen:
der Nukleinsäureaufreinigung, insbesondere
   - "MagSep Blood gDNA": Aufreinigung von genomischer DNA aus Vollblut, insbesondere unter Verwendung des Eppendorf ^{®} MagSep Blood gDNA Kits;
   - "MagSep Tissue gDNA": Aufreinigung von genomischer DNA aus lebendem Gewebe, insbesondere unter Verwendung des Eppendorf ^{®} MagSep Tissue gDNA Kits;
   - "MagSep Viral DNA/RNA": Aufreinigung von viraler RNA oder DNA aus zellfreien Körperflüssigkeiten, insbesondere unter Verwendung des Eppendorf ^{®} MagSep Viral DNA/RNA Kits;
und PCR-Anwendungen, insbesondere
   - "Compose Mastermix"; Erzeugen von einer oder mehrerer PCT Stammmischungen ("mastermixes") aus Vormischungen ("pre-mixes") oder einzelnen Bestandteilen, insbesondere Puffer, Polymerase, dNTPs, Primern, Markern, etc.); dabei wird insbesondere das Volumen jedes benötigten Bestandteils von der Steuereinrichtung berechnet, insbesondere mittels dem Programmmodul, das der Behandlung "Compose Mastermix" zugeordnet ist;
   - "Normalize Concentrations"; dabei werden mindestens zwei DNA/RNA-Probe verdünnt, um in allen Proben dieselbe Konzentration zu erhalten; die gewünschten Konzentrationen können z.B. manuell vom Benutzer eingegeben werden oder aus einer Datei importiert werden;
   - "Create Dilution Series"; dabei werden nacheinander eine oder mehrere DNA/RNA-Standard-Proben mit bekannter Konzentration verdünnt, um eine Kalibrationskurve zu erzeugen, die für die quantitative PCR verwendet werden kann;
   - "Setup Reactions"; dabei werden Reaktionsabläufe erzeugt, indem mehrere oder viele Proben mit einer oder mehrerer Stammmischungen kombiniert werden. Optional können damit auch Reaktionen zur Replikation von DNA/RNA erzeugt werden.

Diese Behandlung erfolgt insbesondere programmgesteuert, unter Verwendung mindestens eines Programmparameters.

Diese Behandlung erfolgt insbesondere gemäß mindestens einem Steuerparameter, der die Behandlung der Laborprobe mittels der Behandlungseinrichtung bestimmt. Ein Steuerparameter kann einen Zeitraum festlegen, einen Zeitpunkt, ein bestimmtes Probenvolumen und/oder Dosiervolumen, eine bestimmte Probentemperatur, etc. Ein Steuerparameter kann die automatische Verwendung eines bestimmten Transportkopfes, eines bestimmten Typs eines Pipettierbehälters, eines bestimmten Typs von Probebehältnissen, einer oder mehrerer individuelle Proben oder von bestimmten Positionen dieser Komponenten im Arbeitsbereich betreffen. Ein Steuerparameter kann die Behandlung einer individuellen Probe betreffen oder die Behandlung mehrerer oder vieler Proben. Ein Steuerparameter kann die Durchführung der ersten und/oder zweiten Messung betreffen.

Der Transport einer Probe kann ein Transport aus einem Probenbehältnis in ein anderes Probenbehältnis oder einen sonstigen Zielort sein. Dieser Transport erfolgt insbesondere programmgesteuert, unter Verwendung mindestens eines Programmparameters.

**Ein Pipettierbehälter**, insbesondere der erfindungsgemäße Pipettierbehälter dient der Aufnahme und/oder der Abgabe einer fluiden Laborprobe. Er weist vorzugsweise auf: einen röhrenförmigen Behälterkörper, das einen ersten und einen zweiten Endabschnitt aufweist. Der erste Endabschnitt weist eine erste Öffnung auf, der zweite Endabschnitt weist eine zweite Öffnung auf, die auch als Fluidaustauschöffnung bezeichnet wird.

Ein Pipettierbehälter, insbesondere der erfindungsgemäße Pipettierbehälter weist vorzugsweise einen Verbindungsabschnitt auf, der zur Verbindung des Pipettierbehälters mit einer Halteeinrichtung eingerichtet ist. Der Verbindungsabschnitt ist vorzugsweise Teil des ersten Endabschnitts und kann den Messhilfsabschnitt aufweisen.

Der Pipettierbehälter, insbesondere ein erfindungsgemäßer Pipettierbehälter, kann z.B. ein Dispenserbehältnis sein, auch als Dispenserspitze bekannt, das eine zylinderförmige Kammer mit erster und zweiter Öffnung aufweist, wobei ein beweglicher Kolben als Verdränger durch die erste Öffnung in die Kammer eingreift und vom Laborautomat automatisch angesteuert wird. Der Kolben erzeugt einen Unterdruck bzw. Überdruck in der Kammer und saugt so die Probe durch die zweite Öffnung in die Kammer hinein oder gibt sie wieder ab. Dieser Vorgang folgt dem Verdrängerprinzip, d.h. die zu bewegende, meist flüssige und somit inkompressible Probe wird zwangsbewegt, indem das zuvor von der Probe eingenommene Volumen vom Kolben bewegt wird. Der Kolben wird in der Regel von einer Bewegungseinrichtung, die dem Laborautomaten zugeordnet ist, bewegt, insbesondere programmgesteuert bewegt.

Der Pipettierbehälter, insbesondere ein erfindungsgemäßer Pipettierbehälter, kann ferner eine Pipettenspitze sein. Eine Pipettenspitze weist eine erste Öffnung und die Fluidaustauschöffnung auf. Die erste Öffnung wird an eine Ansaugeinrichtung gekoppelt, so dass durch einen Unterdruck eine flüssige Probe aus einem Probenbehältnis über die Fluidaustauschöffnung in den Pipettierbehälter gesaugt (pipettiert) werden kann. Die Abgabe der Probe erfolgt durch Ventilieren des Ansaugbereichs, mittels Gravitation und/oder über einen Überdruck, der z.B. über die zweite Öffnung des Pipettierbehälters erzeugt wird. Die Ansaugeinrichtung ist insbesondere Bestandteil des Laborautomaten und wird von diesem mithilfe des Steuerprogramms gesteuert.

Der Pipettierbehälter, insbesondere ein erfindungsgemäßer Pipettierbehälter, besteht vorzugsweise teilweise oder vollständig aus Kunststoff, insbesondere Polypropylen. Es ist vorzugsweise ein Verbrauchsartikel, der typischer Weise nur für eine Behandlung oder eine geringe Zahl von Behandlungsschritten der Probe verwendet wird. Der Pipettierbehälter kann aber auch teilweise oder vollständig aus einem anderen Material bestehen.

Ein **Probenbehältnis** kann ein Einzelbehältnis sein, in dem nur eine einzige Probe enthalten ist, oder kann ein Mehrfachbehältnis sein, in dem mehrere Einzelbehältnisse miteinander verbunden angeordnet sind.

Ein Einzelbehältnis kann ein offenes Behältnis oder ein verschliessbares Behältnis sein. Bei einem verschliessbaren Behältnis kann ein Deckelelement, insbesondere eine Verschlusskappe, vorgesehen sein. Das Deckelelement kann fest mit dem Behältnis verbunden sein, z.B. als Klappdeckel oder Klappverschlusskappe, oder kann als separate Komponent verwendet werden.

Vorzugsweise sind bei einem Mehrfachbehältnis die mehreren Einzelbehältnisse in festen Positionen zueinander angeordnet, insbesondere entsprechend den Kreuzungspunkten eines Gittermusters angeordnet. Die vereinfacht die automatisierte Ansteuerung der Positionen und insbesondere die individuellen Adressierung von Proben. Ein Mehrfachbehältnis kann als Plattenelement ausgebildet sein, bei dem die Einzelbehältnisse so verbunden sind, dass sie eine plattenförmige Anordnung bilden. Die Einzelbehältnisse können als Vertiefungen in einer Platte ausgebildet sein oder können über Stegelemente miteinander verbunden sein. Das Plattenelement kann ein Rahmenelement aufweisen, in dem die Einzelbehältnisse gehalten werden. Diese Verbindungen von Komponenten können integrale Verbindungen sein, d.h. stoffschlüssige Verbindungen und/oder durch einen gemeinsamen Spritzgussprozess erzeugte Verbindungen sein, oder können kraftschlüssig (englisch "force-fit") und/oder formschlüssig (englisch "form-fit") erzeugt sein. Das Plattenelement kann insbesondere eine Mikrotiterplatte sein.

Mehrfachbehältnisse können eine Mehrzahl (von 2 bis 10) Einzelbehältnissen aufweisen. Sie können ferner eine Vielzahl (größer 10) aufweisen, typischer Weise 12, 16, 24, 32, 48, 64, 96, 384, 1536 Einzelbehältnisse. Das Mehrfachbehältnis kann insbesondere eine Mikrotiterplatte sein. Eine Mikrotiterplatte kann gemäß einem oder mehreren Industriestandard(s) ausgebildet sein, insbesondere der Industrienormen ANSI/SBS 1-2004, ANSI/SBS 2-2004, ANSI/SBS 3-2004, ANSI/SBS 4-2004.

Das maximale Probenvolumen, das von einem Pipettierbehälter oder einem Probenbehältnis aufnehmbar ist, liegt typischer Weise zwischen 0,01 ml und 100 ml, insbesondere bei 10 - 100 µl, 100 - 500 µl, 0,5 - 5 ml, 5-25 ml, 25-50 ml, 50-100 ml, abhängig vom Typ des gewählten Pipettierbehälters oder Probengefäßes.

Ein Probenbehältnis oder ein Pipettierbehälter kann einen Informationsbereich aufweisen, der Informationen über das Probenbehältnis oder über dessen Inhalt aufweisen kann. Der Informationsbereich kann codierte Information aufweisen, z.B. einen Barcode oder QR-Code, oder einen RFID-Chip, oder eine anders codierte Information. Die Information kann Information zur Identifizierung der Probe und/oder eines Probenbehältnisses aufweisen. Der Laborautomat kann eine Informationsleseeinrichtung aufweisen, um diese Information zu lesen und, vorzugsweise der Steuereinrichtung zur Verfügung zu stellen. Der Informationsbereich eines Pipettierbehälters kann als dieser Messhilfsabschnitt dienen.

Das Probenbehältnis besteht vorzugsweise teilweise oder vollständig aus Kunststoff, insbesondere Polypropylen. Es ist vorzugsweise ein Verbrauchsartikel, der typischer Weise nur für eine Behandlung oder eine geringe Zahl von Behandlungsschritten der Probe verwendet wird. Das Probenbehältnis kann aber auch teilweise oder vollständig aus einem anderen Material bestehen.

Das Probenbehältnis ist vorzugsweise mit einer Transporteinrichtung des Laborautomaten transportierbar.

Der Laborautomat ist vorzugsweise dazu ausgebildet, eine Vielzahl von Proben nacheinander und/oder parallel zu behandeln. Insbesondere ist der Laborautomat vorzugsweise dazu ausgebildet, eine Vielzahl von Probengefäßen, insbesondere Einzelbehältnisse und/oder Mehrfachbehältnisse, programmgesteuert zu behandeln, insbesondere zu transportieren, zu entleeren und/oder zu befüllen.

Vorzugsweise weist der Laborautomat mindestens eine Haltevorrichtung zum Halten oder Lagern oder Greifen mindestens eines Probenbehältnisses auf, insbesondere einen Halterahmen zum Halten mehrerer Einzelbehältnisse, bezeichnet als "Probengefäßrack". Die Haltevorrichtung ist vorzugsweise transportabel ausgebildet, um innerhalb des Arbeitsbereichs des Laborautomaten, oder zwischen unterschiedlichen Arbeitsbereichen beweglich zu sein. Durch die Haltevorrichtung können eine Mehrzahl oder Vielzahl von Einzelbehältnissen an einer vorbestimmten Position der Haltevorrichtung gehalten werden. Dadurch wird die individuelle programmgesteuerte Ansteuerung oder Adressierung von Probenbehältnissen oder Proben vereinfacht.

Eine Arbeitsstation kann Hilfsmittel zur Positionierung und/oder Ausrichtung von einer oder mehrere Komponenten an dieser Arbeitsposition aufweisen. Diese Komponenten können z.B. eine, mehrere, oder viele Einzelgefäße sein, oder können ein oder mehrere Mehrfachbehältnisse aufweisen, oder eine Haltevorrichtung für Probengefäße aufweisen. Diese Hilfsmittel können der kraft- und/oder formschlüssigen Verbindung dieser Komponenten mit der Arbeitsstation dienen. Z.B. können in der Arbeitsstation an vorbestimmten Positionen der Arbeitsstationen als Hilfsmittel Vertiefungen in der Arbeitsfläche vorgesehen sein, um dort Erhebungen der genannten Komponenten als komplementäre Hilfsmittel formschlüssig aufzunehmen und so die Positionierung und/oder Ausrichtung zu bewirken.

Es kann eine oder mehrere Adaptereinrichtungen vorgesehen sein, um eine erste Halteeinrichtung in vorbestimmter Weise an einer zweiten Halteeinrichtung oder einer Arbeitsstation anzuordnen, insbesondere dort zu positionieren und/oder auszurichten.

Der Laborautomat weist vorzugsweise mindestens einen Arbeitsbereich auf, der zur Umgebung offen sein kann oder durch eine Gehäuseeinrichtung teilweise oder vollständig abgeschirmt sein kann. Vorzugsweise ist die Gehäuseeinrichtung teilweise transparent, um dem Benutzer die Beobachtung der Vorgänge zu ermöglichen, die im Arbeitsbereich, abgeschirmt durch die Gehäuseeinrichtung, programmgesteuert ablaufen. Vorzugsweise weist der Laborautomat genau einen Arbeitsbereich auf. Ein solcher Laborautomat ist kompakt und kann sich insbesondere zur Verwendung auf einem Labortisch eignen, wobei er dann insbesondere auch als Tischgerät bezeichnet wird. Der Tisch kann z.B. die Workbench eines chemischen, biochemischen oder biomedizinischen Labors sein. Der Laborautomat kann auch zur Aufstellung in einem solchen Labor ausgebildet sein. Ein Laborautomat mit einem Arbeitsbereich kann ferner als unabhängig arbeitendes Gerät eines solchen Labors ausgebildet sein, oder kann in einen Geräteverbund eingebunden sein/werden.

Der Laborautomat kann auch als Laborstraße ausgebildet sein, bei dem mehrere Arbeitsbereiche so benachbart angeordnet sind, dass mittels eine Transportvorrichtung eine, mehrere oder eine Vielzahl von Proben, nacheinander und/oder parallel zwischen den Arbeitsbereichen transportiert werden können. Ein Arbeitsbereich einer Laborstraße ist vorzugsweise dazu ausgebildet, dass eine bestimmte Laboraufgabe, betreffend meistens die parallele und/oder sequentielle Bearbeitung einer Vielzahl von Proben, durchgeführt wird. Durch diese Spezialisierung jedes Arbeitsbereichs wird ein hoher Arbeitsdurchsatz der Laborstrasse erreicht. Zur Durchführung einer solchen bestimmten Aufgabe kann vorgesehen sein, dass in jedem Arbeitsbereich nur eine Art der Behandlung mindestens einer Probe, oder nur wenige Arten der Behandlung, z.B. zwei bis zehn Behandlungsarten durchgeführt werden. Die Transportvorrichtung kann ein Schienensystem aufweisen und/oder eine Robotereinrichtung zum programmgesteuerten Bewegen von Proben bzw. Probenbehältnissen.

Ein Laborautomat kann mit einem LIMS verbunden oder verbindbar sein. LIMS steht für Labor-Informations- und Management-System. Ein LIMS ist in bekannter Weise ein Softwaresystem, das die Datenverarbeitung im chemischen, physikalischen, biologischen, medizinischen automatischen oder teilautomatischen Labor betrifft. Solche Daten können aus Messungen der Proben stammen, und/oder können die Steuerung der Bearbeitung der Daten betreffen. Ein LIMS dient vorzugsweise der Messwerterfassung und der Messwertauswertung. LIMS wird dazu verwendet, um den Arbeitsdurchsatz in einem Labor zu steigern und/oder die Effizienz der Behandlung von Laborproben zu optimieren. Ein Arbeitsbereich kann eine vorzugsweise im Wesentlichen planare, vorzugsweise horizontal angeordnete Arbeitsfläche aufweisen. Der Arbeitsbereich kann mehrere vorbestimmte Arbeitsstationen aufweisen. Eine Arbeitsstation kann einem Abschnitt des Arbeitsbereichs zugeordnet sein. Dieser Zuordnung kann fest sein oder kann programmgesteuert bestimmt werden. Eine Arbeitsstation kann fest konfiguriert sein oder kann unterschiedlich bestückbar sein.

Die Position der Arbeitsstationen, und/oder der Zustand der Bestückung der Arbeitsstation, können als Information im Laborautomaten, insbesondere der Datenspeichereinrichtung, gespeichert sein. Diese Information kann verwendet werden, um die programmgesteuerte Behandlung von Proben zu ermöglichen, die an bestimmten Positionen des Arbeitsbereichs angeordnet sind, und die an einer oder mehrerer dieser Arbeitsstationen behandelt werden sollen.

Eine Arbeitsstation kann zur Lagerung von Stoffen dienen, z.B. zur Lagerung von Proben, Reinigungsmitteln, Abfall.

Eine Arbeitsstation kann zur Lagerung von Werkzeugelementen dienen.

Ein Werkzeugelement kann z.B. ein Transportkopf für den Fluidtransfer sein, insbesondere ein Pipettierkopf, der einen Verbindungsabschnitt zur Verbindung eines Pipettierbehälters, insbesondere einer Pipettenspitze oder Dispenserspitze (Einkanalpipettierkopf) aufweisen kann. Die Halteeinrichtung kann der Transportkopf sein oder diesen aufweisen oder der Transportkopf kann die Halteeinrichtung aufweisen. Über mindestens einen druck- und gasdichten Kanal, der mit dem Pipettierkopf verbunden ist, lässt sich Flüssigkeit in die mindestens eine Pipettenspitze saugen, wenn diese mit dem Verbindungsabschnitt verbunden ist. Dieses Pipettieren erfolgt beim Laborautomaten insbesondere programmgesteuert, insbesondere beeinflusst durch mindestens einen Programmparameter. Im Falle eines Dispensierkopfs weist dieser mindestens eine Bewegungseinrichtung zur Bewegung mindestens eines Kolbens mindestens einer Dispenserspitze auf. Die Bewegung der Bewegungseinrichtung erfolgt beim Laborautomaten insbesondere programmgesteuert. Der Transportkopf kann zur Flüssigkeitsdosierung dienen, insbesondere für die Dosierung in unterschiedlichen Bereichen; ein Transportkopf kann zur Dosierung einer flüssigen Probe mit einem Volumen ausgebildet sein, das aus einem für diesen Transportkopf spezifischen Volumenbereich ausgewählt sein kann: z.B. 1 - 50 µL, oder 20 -300 µL, oder 50 -1000 µL, ("l" und "L" stehen jeweils als Abkürzung für Liter). Ein Transportkopf kann als Einkanalkopf ausgebildet sein, bei dem nur eine Probe transportiert wird. Es sind vorzugsweise spezifische Transportbehältnisse vorgesehen, die in Abhängigkeit vom jeweiligen Typ von Transportkopf, insbesondere gemäß dem entsprechenden Volumenbereich eingesetzt werden können.

Ein Werkzeugelement kann z.B. ein Transportkopf für den Transport von Gegenständen sein, z.B. eine Trage- und/oder Greifwerkzeug zum Tragen und /oder Greifen eines Gegenstands, insbesondere eines Probenbehältnisses oder einer Haltevorrichtung für mindestens ein Behältnis. Ein Tragewerkzeug kann einen Befestigungsabschnitt zum lösbaren Befestigen des Gegenstands am Tragewerkzeug aufweisen, z.B. durch kraftschlüssiges und/oder formschlüssiges und/oder magnetisches Verbinden des Gegenstands mit dem Tragewerkzeug. Auf diese Weise können innerhalb der Arbeitsfläche oder zwischen mehreren Arbeitsbereichen und/oder Arbeitsflächen.

Ein Werkzeugelement kann ferner eine Behandlungseinheit sein, z.B. zur Durchführung einer thermischen, akustischen, optischen und/oder mechanischen Behandlung mindestens einer Probe.

Eine Arbeitsstation kann zur Durchführung einer Behandlung von Laborproben dienen. Dazu kann eine Behandlungseinheit an der Arbeitsstation fest installiert sein oder kann dort anordenbar sein. Diese Behandlung erfolgt insbesondere programmgesteuert, unter Verwendung mindestens eines Programmparameters.

Eine Behandlungseinheit zur thermischen Behandlung kann eine Temperiereinrichtung aufweisen, um die mindestens eine Probe zeitgleich oder nacheinander, insbesondere innerhalb festgelegter Zeiträume, auf bestimmte Temperaturen einzustellen und/oder diese Temperaturen mit bestimmten Raten zu ändern. Diese thermische Behandlung erfolgt insbesondere programmgesteuert, unter Verwendung mindestens eines Programmparameters. Auf diese Weise lässt sich z.B. an einer, an mehreren oder einer Vielzahl von PCR-Proben eine PCR (Polymerasekettenreaktion) durchführen.

Eine Behandlungseinheit zur Messung einer Laborprobe kann eine Messeinrichtung zur Messung mindestens einer physikalischen Eigenschaft mindestens einer Probe aufweisen. Eine Behandlungseinheit kann eine Bearbeitungseinrichtung zum Bearbeiten der mindestens einen Probe aufweisen, insbesondere um eine Behandlung der mindestens einen Probe durchzuführen. Eine Bearbeitungseinrichtung kann der mechanischen Bearbeitung der Probe dienen, z.B. dem Bewegen, z.B. Schütteln oder Vibrieren, der thermischen Bearbeitung oder Behandlung mittels Strahlung, um eine (bio-)chemische Reaktion oder biologische oder biomedizinische Zustandsänderung, z.B. sterilisieren, der Probe zu bewirken. Diese Bearbeitung erfolgt insbesondere programmgesteuert, insbesondere unter Verwendung mindestens eines Programmparameters.

Der Laborautomat kann eine Transporteinrichtung zum Transport mindestens eines beweglichen Kopfabschnitts aufweisen. Der Kopfabschnitt kann ein Transportkopf sein, insbesondere zum Transportieren mindestens einer Probe und/oder zum Transportieren mindestens eines Werkzeugelements. Der Kopfabschnitt kann mindestens einen Verbindungsabschnitt zu dessen lösbarer oder dauerhaften Verbindung mit der Transporteinrichtung aufweisen.

Die Transporteinrichtung kann ferner eine programmgesteuerte Bewegungseinrichtung, auch bezeichnet als Robotereinrichtung, aufweisen, um den Kopfabschnitt und/oder den Verbindungsabschnitt und insbesondere gegebenenfalls den mindestens einen Pipettierbehälter programmgesteuert zu bewegen, insbesondere gemäß einem durch die Steuereinrichtung, oder eine andere Steuereinrichtung, vorgegebenen Bewegungsablauf. Der Laborautomat, insbesondere dessen Steuerungseinrichtung und/oder Robotereinrichtung, ist vorzugsweise dazu eingerichtet, den mindestens einen mit der Halteeinrichtung verbundenen Pipettierbehälter zu einer Messtation des Laborautomaten zu transportieren, welche diese zweite Messeinrichtung aufweist, die zur Messung der Position des zweiten Endabschnitts des Pipettierbehälters eingerichtet ist. Der Laborautomat, insbesondere dessen Steuerungseinrichtung und/oder Robotereinrichtung, ist vorzugsweise dazu eingerichtet, die Halteeinrichtung und den mindestens einen mit dieser verbundenen Pipettierbehälter während der Messung der Position des zweiten Endabschnitts des Pipettierbehälters zu bewegen, insbesondere gemäß einer vorbestimmten Bewegung, die insbesondere eine lineare, insbesondere vertikale Bewegung sein kann. Alternativ oder zusätzlich kann auch die Messeinrichtung oder ein beweglicher Teil der Messeinrichtung während Messung in analoger Weise bewegt werden.

Die Robotereinrichtung kann eine oder mehrere Antriebseinrichtungen, z.B. elektrische Motoren, aufweisen, um die programmgesteuerte Bewegung von beweglichen Komponenten zu ermöglichen, z.B. eines beweglichen Kopfabschnitts, insbesondere eines Halte- oder Greifwerkzeugs oder eines anderen beweglichen Werkzeugelementes, z.B. einer beweglichen Behandlungseinheit. Die Robotereinrichtung kann einen ein- oder mehrgliedrigen Bewegungsarm aufweisen, mittels dem der Transport des Kopfabschnitts, und insbesondere der Transport von Proben, zwischen verschiedenen, vorzugsweise frei wählbaren, Positionen des Arbeitsbereichs möglich ist. Die Robotereinrichtung kann ferner ein Schienensystem aufweisen, wobei der Kopfabschnitt in diesem Fall an einem beweglichen Gleit- oder Rollelement befestigt ist, dass über dieses Schienensystem an die Positionen bewegbar ist, die durch die Anordnung des Schienensystems vorgegeben sind. Die Bewegungen der Robotereinrichtung sind vorzugsweise programmgesteuert, und insbesondere gesteuert durch mindestens einen Programmparameter.

Der Laborautomat kann eine Informationsleseeinrichtung aufweisen, um eine Information über eine Probe und/oder ein Probenbehältnis und/oder eine Behandlungsanweisung für diese Probe und/oder dieses Probenbehältnis und/oder analog eines Pipettierbehälters zu lesen und, vorzugsweise, der Steuereinrichtung des Laborautomaten zur Verfügung zu stellen.

Der Laborautomat weist vorzugsweise mindestens eine Dosiereinrichtung auf. Mit dieser kann vorzugsweise mindestens ein gewünschtes Probenvolumen pipettiert und automatisch dosiert und verteilt werden. Die Dosiereinrichtung bzw. die Steuereinrichtung ist vorzugsweise dazu ausgebildet, den Transport eines vorbestimmten Volumens einer Probe aus einem Probenbehältnis in einen Pipettierbehälter und/oder aus dem Pipettierbehälter in ein Probenbehältnis oder einen sonstigen Zielort zu bewirken. Dies erfolgt z.B. durch die Ansteuerung einer Ansaugeinrichtung einer Pipettiereinrichtung, insbesondere durch die Ansteuerung einer Bewegungseinrichtung einer Dispensiereinrichtung, die jeweils vorzugsweise in einen Transportkopf integriert sind. Diese Ansteuerung erfolgt vorzugsweise programmgesteuert.

Der Laborautomat weist vorzugsweise mindestens eine Zeitgebereinrichtung und/oder vorzugsweise eine Zeitnehmereinrichtung auf, um die zeitabhängige Behandlung der Proben zu ermöglichen. Die zeitabhängige Behandlung erfolgt vorzugsweise programmgesteuert, und insbesondere gesteuert durch mindestens einen Programmparameter.

In einer bevorzugten Gestaltung des erfindungsgemäßen Laborautomaten ist dieser dazu ausgebildet, in Abhängigkeit von der vom Benutzer gewählten Behandlungsart und der vom Benutzer eingegebenen Programmparameter automatisch eine oder mehrere der nachfolgend genannten Komponenten automatisch zur Verwendung bei der programmgesteuerten Behandlung auszuwählen:
- mindestens ein geeignetes Probenbehältnis, insbesondere geeignet zur Aufnahme mehrere Proben, die gemeinsam bearbeitet werden sollen, die z.B. gemischt werden sollen oder zwischen denen eine chemische Reaktion oder biochemische, biologische oder biomedizinische Wechselwirkung auftreten soll;
- mindestens einen geeigneten Pipettierbehälter, insbesondere Pipettenspitze und/oder Dispenserspitze;
- mindestens einen geeigneten Transportkopf, mit dem der vorzugsweise automatisch gewählte Pipettierbehälter verbindbar ist,
- mindestens ein geeignetes Werkzeugelement, das der Durchführung der gewünschten Behandlung dient.

Vorzugsweise ist der erfindungsgemäße Laborautomaten dazu ausgebildet, in Abhängigkeit von der vom Benutzer gewählten Behandlungsart und der vom Benutzer eingegebenen Programmparameter automatisch einer oder mehrere der nachfolgend genannten Steuerparameter automatisch zur Verwendung bei der programmgesteuerten Behandlung auszuwählen:
- mindestens ein Zeitraum, zu dem ein bestimmter Arbeitsschritt der Behandlung durchgeführt wird;
- mindestens ein Probenvolumen und/oder Dosiervolumen;
- mindestens eine Arbeitsposition der mindestens einen Arbeitsfläche;
- Bewegungsparameter zur Festlegung der für die gewünschte Behandlung der Probe erforderlichen Bewegungsablauf der Robotereinrichtung des Laborautomaten.

Durch die automatische Auswahl der genannten Komponenten und/oder der Steuerparameter in Abhängigkeit von mindestens einem Programmparameter, insbesondere in Abhängigkeit von dem mindestens einen, vom Benutzer ausgewählten Programmparameter, ergibt sich für den Benutzer der Vorteil, dass er die Auswahl der Komponenten und Steuerparameter nicht selbst einzeln bestimmen muss. Vielmehr erfolgt die Auswahl der für die Behandlung notwendigen Steuerparameter mittels der vom Benutzer eingegebenen Programmparameter. Dadurch ist die Verwendung des Laborautomaten besonders komfortabel.

Die Behandlungseinrichtung des Laborautomaten weist auf: vorzugsweise mindestens einen Arbeitsbereich, vorzugsweise mindestens eine Transporteinrichtung, vorzugsweise mindestens eine Behandlungseinheit.

Ein Pipettierbehälter kann insbesondere ein **Mehrkanalpipettierbehälter** sein. Ein Mehrkanalpipettierbehälter, insbesondere ein erfindungsgemäßer Mehrkanalpipettierbehälter dient der parallelen und/oder gleichzeitigen Aufnahme und/oder der parallelen und/oder gleichzeitigen Abgabe einer Mehrzahl von fluiden Laborproben. Diese Mehrzahl von Kanälen und Laborproben des Mehrkanalpipettierbehälters kann insbesondere der Anzahl von Reihen und/oder Spalten eines Mehrfachbehältnisses, insbesondere einer Mikrotiterplatte angepasst sein. Besonders bevorzugt ist die Mehrzahl M=8. Es kann aber auch ein anderer Wert M gewählt sein, der insbesondere aus der Gruppe der einundreißig bevorzugten Werte {2, 3, 4,..., 8, ..., 12, ..., 16,..., 24, ...31, 32} ausgewählt sein kann. Ein Mehrkanalpipettierbehälter weist vorzugsweise auf: eine Mehrzahl M an röhrenförmigen Behälterkörpern auf, die vorzugsweise parallel und zueinander beabstandet angeordnet sind, vorzugsweise in einem für Standard-Mikrotiterplatten geeigneten Abstand von vorzugsweise d=9mm oder d=4,5 mm (von Zentrum zu Zentrum der Öffnungen benachbarter röhrenförmiger Behälterkörper; alternativ kann der Abstand der Längsachsen benachbarter Behälterkörper herangezogen werden), wobei der Mehrkanalpipettierbehälter einen ersten und einen zweiten Endabschnitt aufweist. Der erste Endabschnitt weist eine erste Öffnung auf, der zweite Endabschnitt weist die Mehrzahl M zweiter Öffnungen auf, die auch als Fluidaustauschöffnungen bezeichnet werden.

Jeder der Behälterkörper dieser Mehrzahl an Behälterkörpern weist vorzugsweise eine Längsachse A auf, entlang der sich der Behälterkörper erstreckt. Diese Längsachsen A verlaufen vorzugsweise parallel, jeweils im Abstand d, wie beschrieben, wobei die Längsachsen A insbesondere linear nebeneinander angeordnet sind, dass also insbesondere die Längsachsen im Wesentlichen eine Gerade C kreuzen, die senkrecht zu jeder der Achsen A verläuft.

Ein Mehrkanalpipettierbehälter, insbesondere der erfindungsgemäße Mehrkanalpipettierbehälter weist vorzugsweise einen Verbindungsabschnitt auf, der zur Verbindung des Mehrkanalpipettierbehälters mit einer Halteeinrichtung eingerichtet ist. Der Verbindungsabschnitt ist vorzugsweise Teil des ersten Endabschnitts und kann den Messhilfsabschnitt aufweisen. Der erste Verbindungsabschnitt des als Mehrkanalpipettierbehälter ausgebildeten Gegenstands verläuft insbesondere entlang der Längsache A (Drehachse) des Mehrkanalpipettierbehälters. Mindestens eine der Längsachsen A, die durch die Mehrzahl der Behälterkörper verläuft, insbesondere jede dieser Längsachsen, verläuft im Wesentlichen parallel, insbesondere parallel, zur Längsachse A (Drehachse) des Mehrkanalpipettierbehälters, um welche der Mehrkanalpipettierbehälter zur Herbeiführung einer Drehstellung drehbar ist. Die mögliche Abweichung der parallelen Lage der besagten Längsachsen von der Längsachse (Drehachse) des Mehrkanalpipettierbehälters kann durch einen Defekt bedingt sein, der durch die Herstellung des Mehrkanalpipettierbehälters erzeugt worden sein kann oder der nach der Herstellung erzeugt wurde, beispielsweise durch thermische Verformung eines aus Kunststoff hergestellten Behälterkörpers.

Der Mehrkanalpipettierbehälter, insbesondere ein erfindungsgemäßer Mehrkanalpipettierbehälter, kann z.B. mindestens zwei als Dispenserbehältnisse gestaltete Behälterkörper aufweisen. Solche Dispenserbehältnisse werden auch als Dispenserspitze oder Dispenserspritze bezeichnet. Ein Dispenserbehältnis weist eine in der Regel zylinderförmige Kammer mit erster und zweiter Öffnung auf, wobei ein beweglicher Kolben als Verdränger durch die erste Öffnung in die Kammer eingreift und von einem Laborautomaten automatisch angesteuert wird. Der Kolben erzeugt einen Unterdruck bzw. Überdruck in der Kammer und saugt so die Probe durch die zweite Öffnung in die Kammer hinein oder gibt sie wieder ab. Dieser Vorgang folgt dem Verdrängerprinzip, d.h. die zu bewegende, meist flüssige und somit inkompressible Probe wird zwangsbewegt, indem das zuvor von der Probe eingenommene Volumen vom Kolben bewegt wird. Der Kolben wird in der Regel von einer Bewegungseinrichtung, die dem Laborautomaten zugeordnet ist, bewegt, insbesondere programmgesteuert bewegt.

Der Mehrkanalpipettierbehälter, insbesondere ein erfindungsgemäßer Mehrkanalpipettierbehälter, besteht vorzugsweise teilweise oder vollständig aus Kunststoff, insbesondere Polypropylen. Es ist vorzugsweise ein Verbrauchsartikel, der typischer Weise nur für eine Behandlung oder eine geringe Zahl von Behandlungsschritten der Probe verwendet wird. Der Mehrkanalpipettierbehälter kann aber auch teilweise oder vollständig aus einem anderen Material bestehen.

Ein Mehrkanalpipettierbehälter kann insbesondere ein Mehrkanaldispensierbehälter sein, mit dem über jeden Kanal zunächst ein Fluidvolumen in den jeweiligen Behälterkörper aufnehmbar ist, und bei dem die Abgabe über jeden Kanal schrittweise erfolgen kann. Ein Beispiel für einen Mehrkanaldispensierbehälter ist die in der europäischen Patentanmeldung EP 3 260 822 A1 beschriebene Mehrkanalspritze. Ein Behälterkörper dieser Mehrkanalspritze wird dort als Spritzenzylinder bezeichnet.

Der von der Halteeinrichtung des Messapparats gehaltene Gegenstand ist vorzugsweise ein Werkzeugelement, insbesondere ein Transportkopf für den Fluidtransfer, insbesondere ein Pipettierkopf, der einen Verbindungsabschnitt zur Verbindung mindestens eines Pipettierbehälters, insbesondere mindestens einer Pipettenspitze oder mindestens einer Dispenserspitze aufweisen kann. Dieses Werkzeugelement kann insbesondere ein Mehrkanalpipettierkopf sein. Das Werkzeugelement kann zur Verwendung mit mindestens einem oder mehreren wechselbaren Werkzeugen eingerichtet sein, wobei insbesondere das mindestens eine wechselbare Werkzeug den zweiten Endabschnitt mit dem Endbereich aufweisen kann, dessen Position mittels der zweiten Messeinrichtung gemessen wird und in Abhängigkeit von der Lage des Messhilfsabschnitts als Relativpositionsdaten in der Datenspeichereinrichtung gespeichert wird ("Relative" Referenz). Das als Mehrkanalpipettierkopf ausgebildete Werkzeugelement kann insbesondere dazu eingerichtet sein, mit mindestens zwei Pipettierspitzen verbunden zu sein oder verbindbar zu sein, die als Werkzeuge für einen parallelen bzw. zeitgleichen Fluidtransfer dienen.

Über mindestens einen druck- und gasdichten Kanal, der mit dem Mehrkanalpipettierkopf verbunden ist, lässt sich Flüssigkeit parallel bzw. zeitgleich in die mindestens zwei Pipettenspitzen saugen, wenn diese mit den entsprechenden Verbindungsabschnitten des Mehrkanalpipettierkopfs verbunden ist. Dieses Mehrkanal-Pipettieren erfolgt bei einem Laborautomaten insbesondere programmgesteuert, insbesondere beeinflusst durch mindestens einen Programmparameter. Im Falle eines als Dispensierkopf ausgebildeten Werkzeugelements weist dieser mindestens eine Bewegungseinrichtung zur Bewegung mindestens eines Kolbens mindestens einer Dispenserspitze auf. Die Bewegung der Bewegungseinrichtung erfolgt beim Laborautomaten insbesondere programmgesteuert. Der Mehrkanalpipettierkopf kann zur Flüssigkeitsdosierung dienen, insbesondere für die Dosierung in unterschiedlichen Volumenbereichen; ein Mehrkanalpipettierkopf kann zur Dosierung mehrerer flüssiger Proben mit jeweils einem Volumen ausgebildet sein, das aus einem für diesen Mehrkanalpipettierkopf spezifischen Volumenbereich ausgewählt sein kann: z.B. 1 - 50 µL, oder 20 -300 µL, oder 50 -1000 µL, ("l" und "L" stehen jeweils als Abkürzung für Liter). Es sind vorzugsweise spezifische Transportbehältnisse, insbesondere Pipettenspitzen, vorgesehen, die in Abhängigkeit vom jeweiligen Typ von Mehrkanalpipettierkopf, insbesondere gemäß dem entsprechenden Volumenbereich eingesetzt werden können.

Der erfindungsgemäße Gegenstand, insbesondere Mehrkanalpipettierbehälter, weist einen Gegenstandskörper auf, der insbesondere mehrere röhrenförmige Behälterkörper beinhalten kann. Der Gegenstandskörper weist einen ersten und einen zweiten Endabschnitt auf. Der zweite Endabschnitt kann insbesondere mehrere Behälterkörper umfassen. Der Endbereich des zweiten Endabschnitts kann die mehreren Mündungsbereiche der mehreren Behälterkörper umfassen, wobei ein Mündungsbereich jeweils die Fluidaustauschöffnung des jeweiligen Behälterkörpers ausfweist. Der erste Endabschnitt ist zur Verbindung des Gegenstands, insbesondere des Mehrkanalpipettierbehälters, mit der Halteeinrichtung des erfindungsgemäßen Messapparats eingerichtet und weist einen Messhilfsabschnitt auf. Zumindest ein Abschnitt des Gegenstandskörpers, insbesondere jeweils der röhrenförmige Behälterkörper oder zumindest ein Abschnitt der röhrenförmigen Behälterkörper, erstreckt sich vorzugsweise entlang einer Längsachse A. Der Messhilfsabschnitt ist so eingerichtet, dass dessen Lagemessung bezüglich dieser Halteeinrichtung die Bestimmung der Lage des Gegenstands, insbesondere Mehrkanalpipettierbehälters, bezüglich dieser Halteeinrichtung ermöglicht. Der Endbereich mit den mehreren Mündungsbereichen weist eine Position in Bezug auf diesen Messhilfsabschnitt auf, also eine Relativposition. Der Messapparat ist dazu eingerichtet, die Position des Endbereichs in Abhängigkeit von der Lage des Messhilfsabschnitts als Relativpositionsdaten in der Datenspeichereinrichtung zu speichern, so dass nachfolgend die Position des Endbereichs des Mehrkanalpipettierbehälters durch Messung der Lage des Messhilfsabschnitts und aus den Relativpositionsdaten ermittelbar ist.

Der Messapparat kann dazu eingerichtet sein, mittels der zweiten Messeinrichtung die Positionen mehrerer Mündungsbereiche, insbesondere aller Mündungsbereiche, des Endbereichs in Bezug auf den Messhilfsabschnitt zu erfassen bzw. zu messen. Der Messapparat kann eine Auswertungseinrichtung aufweisen, um die Messung der Positionen der mehreren Mündungsbereiche auszuwerten, insbesondere um aus den erfassten Positionen der mehreren Mündungsbereiche die Relativpositionsdaten zu ermitteln. Vorzugsweise ist die Auswertungseinrichtung dazu eingerichtet, aus den erfassten Positionen der mehreren Mündungsbereiche einen statistischen Wert abzuleiten, der die Relativpositionsdaten definiert. Dieser statistische Wert kann eine Mittelwertgröße sein, insbesondere ein Mittelwert, ein Median, oder vorzugsweise ein Bereichsmittelwert. Ein Bereichsmittelwert ist generell definiert als der arithmetische Mittelwert aus dem größten und dem kleinsten Beobachtungswert.

Beispielsweise kann die Positionsmessung eines Mündungsbereichs bedingen, dass die Position des Mündungsbereichs in einer Ebene -bzw. die Position der Projektion des Mündungsbereichs entlang der Achse A auf diese Ebene- bestimmt wird, die senkrecht zur Längsachse A des Behälterkörpers und durch die Gerade C verläuft, auf der die einzelnen Längsachsen A der Behälterkörper des Mehrkanalpipettierbehälters aufgereiht sind. Die Position eines -als Punkt angenommenen, z.B. der Mittelpunkt der Mündungsöffnung des Mündungsbereichs - Mündungsbereichs kann dann durch den in dieser Ebene betrachteten Abstand des Mündungsbereichs und insbesondere auch durch die Richtung des Mündungsbereichs bestimmt sein. Der Abstand lässt sich insbesondere als Abstand des Mündungsbereichs ausgehend von der Position der Längsachse A des zugehörigen Behälterkörpers innerhalb dieser Ebene oder als Abstand von einem Punkt an der Halteeinrichtung angeben. Die Position eines Mündungsbereichs kann auch als Punkt (x, y) eines kartesischen Koordinatensystems angegeben werden, dessen Ursprung insbesondere die Lage der Längsachse A in dieser Ebene ist und dessen x-Achse die Gerade C ist. Die zu speichernden Relativpositionsdaten könnten dann einen Mittelwertspunkt (M_x, M_y) beinhalten, der sich bestimmt aus dem Mittelwert M_x der xi-Werte und dem Mittelwert M_y der yi-Werte der betrachteten Positionen (xi, yi) der Mündungsbereiche, wobei jede der Positionen (xi, yi) jeweils mit Bezug auf die zum jeweiligen Behälterkörper gehörenden Längsachse Ai definiert ist, die den Ursprung des jeweiligen Koordinatensystems bestimmt. Dieser Mittelwertspunkt kann auch ein Bereichsmittelwert (W_x, W_y) definiert sein, wobei W_x definiert ist als der arithmetische Mittelwert aus dem größten Wert xi_max und dem kleinsten Wert xi_min aller Werte xi, also W_x = (xi_max - xi_min)/2 und wobei W_y definiert ist als der arithmetische Mittelwert aus dem größten Wert yi_max und dem kleinsten Wert yi_min aller Werte yi, also W_y = (yi_max - yi_min)/2. Es kann aber auch ein an der Halteeinrichtung gelegener Punkt als Ursprung des genannten Koordinatensystems ausgewählt werden, dessen x-Achse ebenfalls in Bezug auf die Halteeinrichtung festgelegt sein kann.

Die Auswertungseinrichtung ist vorzugsweise Bestandteil einer elektronischen Steuereinrichtung des Messapparats.

Der Messhilfsabschnitt dient insbesondere dazu, eine eindeutige Lagebestimmung des Mehrkanalpipettierbehälters in Bezug auf ein festes Koordinatensystem zu ermöglichen, das insbesondere an der Halteeinrichtung oder im Arbeitsbereich eines Messapparats oder Laborbehälters fixiert sein kann. Die möglichst genaue Angabe der Relativposition des Mehrkanalpipettierbehälters bezüglich des Messhilfsabschnitts kann es sinnvoll machen, mehrere Messdaten mittels der zweiten Messeinrichtung zu erfassen und diese mehreren Messdaten in Form eines Datensatzes als diese Relativpositionsdaten zu speichern. Die Relativpositionsdaten können auch einen Datensatz beinhaltend eine Mehrzahl M1 an Messdaten beinhalten. Jede dieser Messdaten des Datensatzes kann die Information über eine Position eines Mündungsbereichs eines Behälterkörpers eines Mehrkanalpipettierbehälters beinhalten.

In einer ersten bevorzugten Ausführungsform ist der Mehrkanalpipettierbehälter so geformt, dass die Längsachse jedes Behälterkörpers zentral durch den Mündungsbereich verläuft. Ein solcher Mehrkanalpipettierbehälter eignet sich insbesondere für die Probenabgabe gemäß dem Freistrahlprinzip, insbesondere in Richtung vertikal nach unten, also in Richtung der Gravitation.

In einer zweiten bevorzugten Ausführungsform ist der Mehrkanalpipettierbehälter so geformt, dass der Mündungsbereich jedes Behälterkörpers mit einem senkrechten Abstand d>0 zu dessen Längsachse angeordnet ist. Durch diesen Versatz d>0 eignet sich ein solcher Mehrkanalpipettierbehälter insbesondere für die Wandabgabe der Probe, wobei die genaue Wahl von d abhängt von der gewünschten Verwendung des Mehrkanalpipettierbehälters, insbesondere von dem Durchmesser des Probenbehälters, an dem eine Wandabgabe erfolgen soll. Der Mündungsbereich ist in diesem Fall insbesondere jeweils so angeordnet, dass eine Längsachse B durch die Fluidaustauschöffnung und den Mündungsbereich, insbesondere auch durch den gesamten zweiten Endabschnitt, in Richtung schräg vertikal nach unten verläuft, also in einem Winkel α>0° zur Längsachse, wobei vorzugsweise 0°< α<80°, vorzugsweise 0,5°< α<60°, vorzugsweise 1°< α<45°. Auch die Wahl dieses Winkels hängt von der gewünschten Verwendung des Pipettierbehälters ab.

Die zweite Messeinrichtung ist zur Messung der Position des Endbereichs, insbesondere Mündungsbereichs des Pipettierbehälters, insbesondere des Mehrkanalpipettierbehälters, eingerichtet. Die zweite Messeinrichtung ist vorzugsweise dazu eingerichtet, die Position von einem oder mehreren Punkten des Endbereichs in Bezug auf den Messhilfsabschnitt zu erfassen. Die zweite Messeinrichtung ist vorzugsweise dazu eingerichtet, die Position von mehr als einem Punkt des Endbereichs in Bezug auf den Messhilfsabschnitt zu erfassen, insbesondere eine Vielzahl von Punkten des Endbereichs in Bezug auf den Messhilfsabschnitt zu erfassen. Dadurch kann die Position des Endbereichs noch genauer angegeben werden. Bei einem Mehrkanalpipettierbehälter können so die Positionen von mehreren oder allen Mündungsbereichen der Behälterkörper des Mehrkanalpipettierbehälters erfasst werden, so dass eine genaue bzw. vollständige Information über die Information des in diesem Fall mehrgliedrigen Endbereichs speicherbar ist.

Die zweite Messeinrichtung kann im Falle eines als Mehrkanalpipettierbehälter ausgebildeten Gegenstands in derselben Weise gestaltet sein wie im Falle der Messung an einem als (Einzel-)Pipettierbehälter ausgebildeten Gegenstand. Vorzugsweise weist die zweite Messeinrichtung mindestens eine Lichtquelle auf und mindestens einen optischen Sensor, die zur Messung der Position des Mündungsbereichs angeordnet sind oder anordenbar sind. Insbesondere können solche Bestandteile der zweiten Messeinrichtung und der Mehrkanalpipettierbehälter zur Durchführung einer vorbestimmten Relativbewegung angeordnet sein. Auf diese Weise kann der den Mehrkanalpipettierbehälter aufnehmende bzw. enthaltende Raumbereich optisch abgetastet werden, um die Position der Mündungsbereiche der Behälterkörper des Mehrkanalpipettierbehälters zu ermitteln, vorzugsweise nacheinander, indem die Mündungsbereiche nacheinander eine im Raumbereich liegende Messposition anfahren, an der die Position des Mündungsbereichs gemessen wird. Die Mündungsbereiche können aber auch alle oder teilweise gleichzeitig gemessen werden, um die Positionen von mehreren oder allen Mündungsbereichen gleichzeitig zu messen bzw. zu erfassen.

Zur Durchführung der Relativbewegung wird der Mehrkanalpipettierbehälter vorzugsweise linear, insbesondere horizontal, gegenüber der zweiten Messeinrichtung durch den genannten Raumbereich geführt. Die Lage des Mehrkanalpipettierbehälters ist dann vorzugsweise so, dass die lineare Relativbewegung parallel zur Achse C verläuft, entlang der die Behälterkörper des Mehrkanalpipettierbehälters vorzugsweise aufgereiht sind. Es ist auch möglich, dass die Relativbewegung vertikal verläuft, indem der Mehrkanalpipettierbehälter vertikal von oben in den genannten Raumbereich eingeführt wird, um dort die Messung durchzuführen.

In einer bevorzugten Ausführungsform weist eine zweite Messeinrichtung mindestens eine Lichtquelle auf, insbesondere eine LED, insbesondere Infrarot-LED, die das Licht zur Beleuchtung des Raumbereichs bereitstellt, der zum Zweck der Messung mindestens einen Mündungsbereich der Behälterkörper des Mehrkanalpipettierbehälters zumindest zeitweise enthält. Vorzugsweise wird das Licht gleichmäßig auf diesen Raumbereich gerichtet. Vorzugsweise wird das Licht im Wesentlichen kollimiert, insbesondere kollimiert, auf diesen Raumbereich gerichtet. Dieses wird insbesondere mittels Strahlführungsmaßnahmen, z.B. Linse(n), Spiegel(n) etc. so geführt, dass es aus zwei Richtungen durch den Raumabschnitt tritt und danach auf mindestens einen optischen Sensor fällt. Dieser kann insbesondere ein Zeilensensor sein, insbesondere ein CCD- oder ein CMOS-Zeilensensor.

Um mittels des Zeilensensors die Position des Mündungsbereichs zu ermitteln, wird vorzugsweise von der Steuereinrichtung die ortsaufgelöst detektierte Variation der Abschattung ausgewertet, die sich ergibt, wenn der zweite Endabschnitt bzw. der Mündungsbereich mit vorbestimmter Bewegung - insbesondere mit konstanter Geschwindigkeit- in vorbestimmter Richtung - insbesondere in horizontaler Richtung und/oder in Richtung der Längsachse des ersten Endabschnitts bzw. in vertikaler Richtung - in dem Raumabschnitt bewegt wird.

Vorzugsweise ist generell die Steuereinrichtung zur Steuerung dieser vorbestimmten Bewegung eingerichtet, insbesondere in der Weise, dass der Gegenstand, insbesondere ein Pipettierbehälter oder, wie hier beschrieben, der Mehrkanalpipettierbehälter, insbesondere der jeweilige zweite Endabschnitt bzw. Mündungsbereich zum Zeitpunkt der Messung unbewegt ist, um einen möglichst scharf berandeten Schatten zu erfassen. Es ist aber auch möglich und bevorzugt, dass die Sensorempfindlichkeit geeignet ist und die der Zeitraum der Sensormessung, also insbesondere eine Belichtungszeit, geeignet kurz gewählt sind, so dass bei bewegtem Gegenstand die Bewegungsdistanz des Schattens des beobachteten zweiten Endabschnitts bzw. Mündungsbereichs kleiner ist als die Breite eines Pixels des optischen Sensors in dieser Bewegungsrichtung - man geht bei dieser Betrachtung davon aus, dass die Ortsauflösung des Sensors durch dessen Pixeldichte bestimmt ist. Die Steuereinrichtung ist vorzugsweise dazu eingerichtet, die aus den Schatten berechnete Mittelpunktposition des jeweiligen Endabschnitts bzw. Mündungsbereichs auf die durch die Längsachse A des jeweiligen Gegenstands bzw. Pipettierbehälter bzw. die Längsachse Ai eines Multipipettierbehälters zu beziehen, um daraus die Abweichung bzw. notwendige Korrektur zu berechnen. Diese Korrektur berücksichtigt gegebenenfalls eine aus mehreren Messdaten der zweiten Messeinrichtung ermittelte Mittelwertsgröße.

Da das Licht aus zwei Richtungen durch den Raumabschnitt fällt, ergeben sich - innerhalb der durch die realisierte Geometrie zulässigen Positionstoleranzen - zwei getrennte Schatten, wenn der Pipettierbehälter im Raumabschnitt angeordnet ist. Wird der Behälterkörper des Mehrkanalpipettierbehälters im Raumausschnitt bewegt , verändert sich die Lage der Abschattungen auf dem Zeilensensor. Auch kann eine von einer idealen (mess-)Position abweichende Position des jeweiligen Endabschnitts festgestellt werden, wenn ein solcher auf eine, basierend auf den aus den bekannten Koordinaten der Messeinrichtung und den idealen Geometriedaten des Endabschnitts errechenbare, oder nach Bestimmung mit Hilfe einer Referenzspitze, bekannte Idealposition platziert wird. Dies ist beispielsweise bei einem schiefstehenden Endabschnitt der Fall. In Kombination mit der bekannten Messgeometrie und mittels herkömmlicher Überlegungen zur Projektion und Koordinatentransformation kann auf die aktuelle Position des Mündungsbereichs mit dem Bezugspunkt an der Halteeinrichtung geschlossen werden und so die laterale Abweichung bzgl. eienr Refrenzposition ermittelt werden. (Wird der Endabschnitt von oben bzw. mit seiner Endfläche vertikal in den Lichtvorhang geführt und somit ein Schattenbild auf dem Sensor erzeugt, kann die z-Position der Pipettenspitze gemessen werden und so die Länge der Spitze gemessen werden und gegebenenfalls die Endfläche auf eine gewünschte Position korrigiert werden) Wenn die Halteeinrichtung als Bestandteil eines Laborautomaten ohnehin beweglich ausgeführt ist, ist eine solche Lösung besonders effizient.

Die zweite Messeinrichtung ist vorzugsweise dazu eingerichtet, aus zwei unterschiedlichen Richtungen jeweils mindestens eine optische Messung durchzuführen. Diese optische Messung kann insbesondere die Erfassung eines Abbilds von mehr als einem Mündungsbereich oder aller Mündungsbereiche eines Mehrkanalpipettierbehälters vorsehen. Dazu kann die zweite Messeinrichtung einen oder zwei Bildsensoren aufweisen, oder weitere Bildsensoren. Die Bildsensoren sind vorzugsweise parallel zu einer Längsachse A und parallel zur Achse C des Mehrkanalpipettierbehälters angeordnet.

Die zweite Messeinrichtung und die Halteeinrichtung sind vorzugsweise beweglich zueinander angeordnet. Dadurch kann insbesondere ein mit der Halteeinrichtung verbundener Mehrkanalpipettierbehälter bedarfsweise an der zweiten Messeinrichtung positioniert werden, um die Positionsmessung durchzuführen. Ist der Messapparat im Arbeitsbereich eines Laborautomaten stationär angeordnet, kann die Halteeinrichtung zur Position des Messapparats bewegt werden, um die Positionsmessung durchzuführen. Die dafür erforderliche Zeit - und der auf der Arbeitsfläche benötigte Platz - kann optimal reduziert werden, wenn die zweite Messeinrichtung in einer bevorzugten Ausführungsform beweglich an der Halteeinrichtung angeordnet ist. Auch in diesem Fall kann die zweite Messeinrichtung bedarfsweise zum Pipettierbehälter bewegt werden, aber der erforderliche Wegstrecke der Bewegung ist verkürzt. Wird die Halteeinrichtung bewegt, so wird in gleicher Weise auch die zweite Messeinrichtung bewegt, so dass die Wegstrecke nicht - wie im erstgenannten Fall- von der Position der Halteeinrichtung im Arbeitsbereich abhängt.

Weitere bevorzugte Ausgestaltungen des erfindungsgemäßen Laborautomaten und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt schematisch ein Ausführungsbeispiel eines erfindungsgemäßen Messapparats.
Fig. 2 zeigt, in einer perspektivischen Ansicht, ein Ausführungsbeispiel von Bestandteilen eines erfindungsgemäßen Messapparats.
Fig. 3 zeigt, in einer Seitenansicht, die Bestandteile aus Fig. 2, in einer Messposition der zweiten Messeinrichtung des Messapparats.
Fig. 4 zeigt, in einer perspektivischen Ansicht, ein Ausführungsbeispiel eines Laborautomaten, der mit dem erfindungsgemäßen Messapparat ausgerüstet ist, der die Bestandteile aus Fig. 2 und 3 aufweist.
Fig. 5a zeigt, in einer perspektivischen Ansicht, ein weiteres Ausführungsbeispiel eines Laborautomaten, der mit dem erfindungsgemäßen Messapparat gemäß einer weiteren bevorzugten Ausführungsform ausgerüstet ist, in einer ersten Position der zweiten Messeinrichtung.
Fig. 5b zeigt, in einer perspektivischen Ansicht, den Laborautomaten aus Fig. 5a, in einer zweiten Position der zweiten Messeinrichtung.
Fig. 6a zeigt, in einer perspektivischen Ansicht, den ersten Endabschnitt eines erfindungsgemäßen Pipettierbehälters gemäß einer bevorzugten Ausführungsform, und dessen Messhilfsabschnitt.
Fig. 6b zeigt, in einer Seitenansicht, einen erfindungsgemäßen Pipettierbehälter gemäß einer bevorzugten Ausführungsform und einen Teil einer Halteeinrichtung eines erfindungsgemäßen Messapparats, gemäß einem Ausführungsbeispiel, wobei der Pipettierbehälter nicht mit der Halteeinrichtung verbunden ist.
Fig. 6c zeigt dieselben Bestandteile wie die Fig. 6b, wobei der Pipettierbehälter mit der Halteeinrichtung verbunden ist.
Fig. 7a zeigt einen erfindungsgemäßen Pipettierbehälter gemäß einer bevorzugten Ausführungsform, in Freistrahlabgabe über einem Probenbehältnis.
Fig. 7b zeigt einen erfindungsgemäßen Pipettierbehälter gemäß einer weiteren bevorzugten Ausführungsform, in Wandabgabe über einem Probenbehältnis.
Fig. 8a zeigt ein Ausführungsbeispiel einer Messanordnung mit einer zweiten Messeinrichtung eines erfindungsgemäßen Messapparats gemäß dem Ausführungsbeispiel der Figuren 2 und 3.
Fig. 8b zeigt ein Diagramm mit dem Ausgabesignal eines optischen Zeilensensors, der Bestandteil der zweiten Messeinrichtung gemäß Fig. 8a ist.

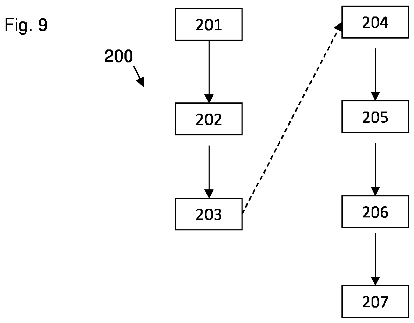

Fig. 9 zeigt schematisch den Ablauf des erfindungsgemäßen Verfahrens gemäß einem Ausführungsbeispiel.
Fig. 10 zeigt eine perspektivische Ansicht eines erfindungsgemäßen Mehrkanalpipettierbehälters gemäß einem Ausführungsbeispiel , der an der zweiten Messeinrichtung eines erfindungsgemäßen Messapparats gemäß einem Ausführungsbeispiel angeordnet ist.
Fig. 11 zeigt eine frontale Seitenansicht eines Teils des zweiten Abschnitts des in Fig. 10 gezeigten Mehrkanalpipettierbehälters und den acht Längsachsen des Mehrkanalpipettierbehälters zugeordnete Koordinatensysteme, anhand derer die Berechnung der Relatovposition des Endbereichs gemäß einem Ausführungsbeispiel erläutert wird.

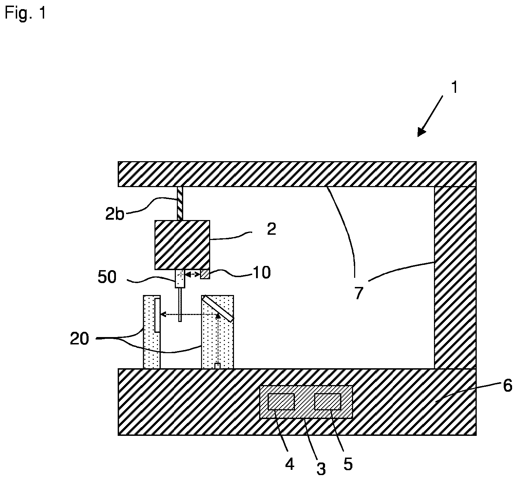

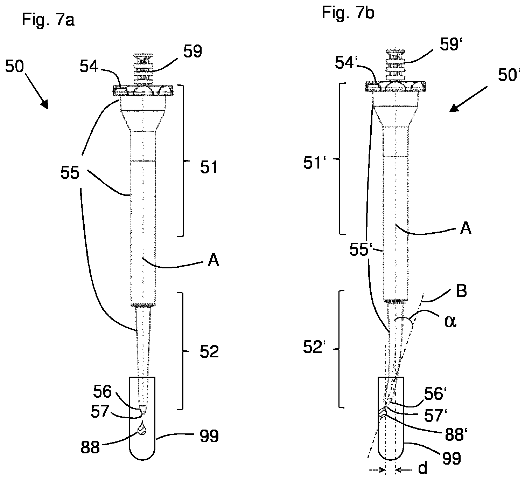

Figur 1 zeigt den Messapparat 1, welcher zur Erfassung der Relativposition eines Endabschnitts eines bewegbaren Gegenstands, hier eines Pipettierbehälters 50 eingerichtet ist. Dieser dient dem Pipettieren im weitesten Sinne, also einerseits der Aufnahme einer fluiden, meist flüssigen, Laborprobe mittels Ansaugen in den Pipettierbehälter und andererseits der Abgabe der fluiden Laborprobe. Er weist, wie dies anhand der beispielhaften erfindungsgemäßen Dispenserspitzen 50, 50' jeweils in Fig. 7a und 7b gezeigt ist, einen röhrenförmigen Behälterkörper 55, 55' mit einem ersten Endabschnitt 51, 51' und einem zweiten Endabschnitt 52, 52' auf, wobei der erste Endabschnitt zur Verbindung des Pipettierbehälters mit der Halteeinrichtung eingerichtet ist und einen Messhilfsabschnitt 54, 54' aufweist, und wobei der zweite Endabschnitt einen Mündungsbereich 56, 56' mit einer Fluidaustauschöffnung 57, 57' aufweist.

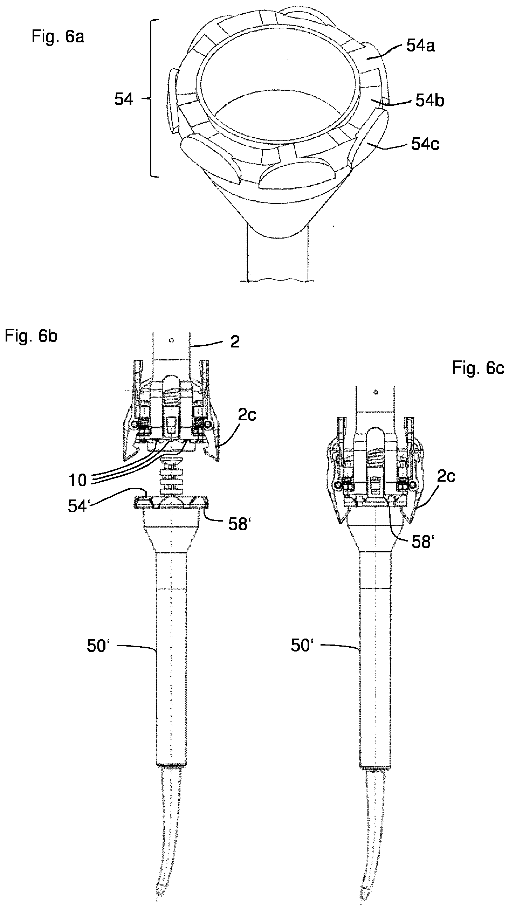

Der Messhilfsabschnitt 54, 54' ist hier als ein um die Längsachse A des Pipettierbehälters und an dessen Befestigungsflansch 58, 58' angeordnetes Höhenprofil 54a, 54b ausgeführt. Die Höhe des Höhenprofils 54a, 54b (Fig. 6a) variiert umlaufend um die Achse A in Richtung A. Es ist so ausgeführt, dass es gegenüber der Halteeinrichtung 2 in einer vorgegebenen Zahl N, hier N=7, vorzugsweise N=14, von mittels Rastelementen 54c definierten Rastpositionen arretiert werden kann (siehe Fig. 6a, 6b), wenn der Befestigungsflansch 58, 58' an den Halteklammern 2c verrastet wird. Die genannte Befestigung kann von der Steuereinrichtung durch elektronische Ansteuerung eines Aktuators gelöst werden (nicht gezegit). Eine Abtasteinrichtung 60 mit N mechanischen Druckschaltern erfasst an jeder Druckschalterposition, ob dieser vom Höhenprofil ausgelenkt wurde oder nicht (Schalterstellungen 0 und 1, entsprechend der Information von 1 Bit). Indem das Höhenprofil nicht rotationssymmetrisch zur Achse A ausgeführt ist, kann die Drehstellung aus dem Höhenprofil ermittelt werden. Ferner kann das Höhenprofil zur Kodierung weiterer Information verwendet werden, z.B. um welchen herstellerseitig vordefinierten Typ eines Pipettierbehälters es sich handelt.

Der Messapparat weist eine auf der Basisplatte 6 montierte Trägereinrichtung 7 zum Tragen der Halteeinrichtung 2 auf, die den Pipettierbehälter 50 trägt, insbesondere eine Bewegungseinrichtung 2b zum Bewegen des Verbindungsabschnitts, mit dem der Pipettierbehälter mit der Halteeinrichtung verbunden ist, zudem eine elektronische Steuereinrichtung 3 mit einer Prozessoreinrichtung 4 zur Datenverarbeitung und mit einer Datenspeichereinrichtung 5 zum Speichern von Daten.

Der Messapparat 1 weist eine erste Messeinrichtung 10 auf, die zur Messung einer Lage, hier einer Drehstellung, des Messhilfsabschnitts des Pipettierbehälters 50, 50' an der Halteeinrichtung eingerichtet ist, und eine zweite Messeinrichtung 20, die zur Messung der Position des Mündungsbereichs 56, 56' des Pipettierbehälters eingerichtet ist.

Der Messapparat 1 bzw. dessen Steuereinrichtung 3 ist dazu eingerichtet ist, die Position des Mündungsbereichs 56, 56' in Abhängigkeit von der Lage des Messhilfsabschnitts 54, 54' als Relativpositionsdaten in der Datenspeichereinrichtung 5 zu speichern, so dass nachfolgend die Position des Mündungsbereichs des Pipettierbehälters durch Messung der Lage des Messhilfsabschnitts und aus den Relativpositionsdaten ermittelbar ist. Falls der Pipettierbehälter eine elektronisch erfassbare individuelle Identifikation aufweist, können die in der Datenspeichereinrichtung gespeicherten Daten (Relativpositionsdaten) durch die Identifikationsdaten ergänzt werden. Dann kann nachfolgend aus der Identifikation die Relativposition des Mündungsbereichs abgefragt werden. Falls keine Identifikationskennzeichnung vorliegt, muss lediglich die Ablageposition des vermessenen Pipettierbehälters elektronisch verfolgt werden, was im Falle eines Laborautomaten nicht schwer ist.

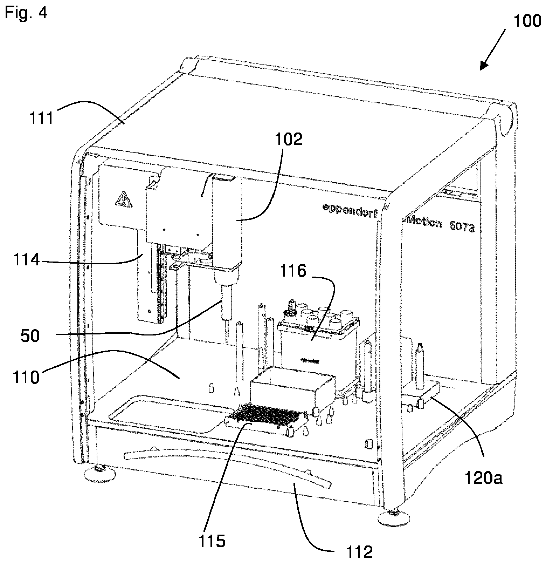

Fig. 4 zeigt einen Laborautomaten 100 für die Behandlung mindestens einer fluiden Laborprobe (Liquid-Handling-Automat), der mit einem erfindungsgemäßen Messapparat ausrüstbar ist. Der Arbeitsbereich 110 mit dem darüber gelegenen Arbeitsraum ist von einer Gehäuseeinrichtung 111 mit Fronttüre 112 umhüllt. Auf dem Arbeitsbereich sind verschiedene Artikel wie eine Mikrotiterplatte 115 und eine Probenröhrchenhalterung 116 an bestimmten Arbeitsstationen platziert. Das Öffnen der Fronttüre 112 wird mittels Sensor von der Steuereinrichtung des Laborautomaten elektronisch überwacht. Wenn bei geschlossener Fronttüre im Arbeitsraum die Relativpositionsdaten der Mündungsbereichposition eines bestimmten Pipettierbehälters einmal ermittelt wurde, kann durch Speichern der Bewegungshistorie dieses Pipettierbehälters jederzeit die Information über seine Relativpositionsdaten mit größter Sicherheit korrekt abgefragt werden. Falls die Fronttüre nicht geöffnet wurde, kann die Position des Pipettierbehälters im Arbeitsraum auch nicht von einem Benutzer geändert worden sein.

Der Laborautomat weist eine Halteeinrichtung 102 zum Halten des Pipettierbehälters 50 auf, hier eine Dispenserspitze. Die Halteeinrichtung 102 ist von einer Robotereinrichtung 114 im Arbeitsraum automatisch positionierbar. Die Pipettierfunktion des Ansaugens oder der Abgabe der fluiden Laborprobe in den/aus dem Pipettierbehälter wird durch automatisierte Bewegung des Kolbens 59, 59' (teilweise sichtbar in Fig. 7a, 7b) erreicht.

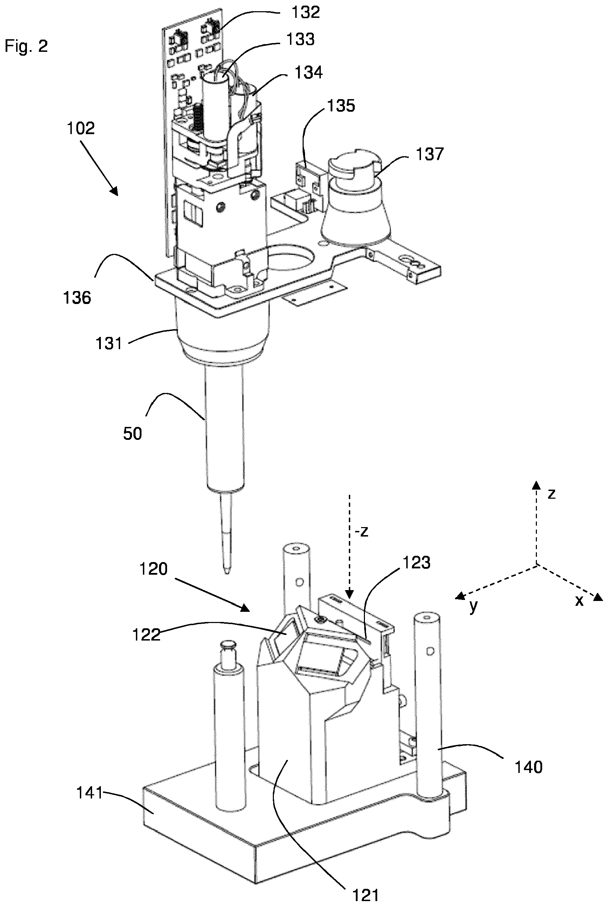

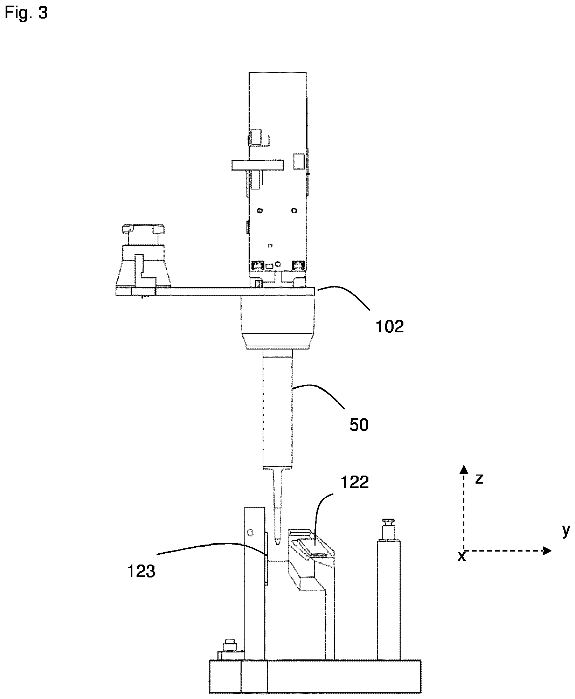

Die Bestandteile des im Laborautomaten 100 einsetzbaren Messapparats, insbesondere die Position 120a zur Aufnahme der zweiten Messeinrichtung 120, sind in den Figuren 2 und 3 gezeigt. Die Halteeinrichtung weist einen Verbindungsabschnitt 131 zum Verbinden des Pipettierbehälters 50, 50' auf. Zudem ist die Messeinrichtung 60 in den Verbindungsabschnitt integriert, die den Pipettierbehälter in der Verbindungsposition im Ausführungsbeispiel kontaktiert, siehe Fig. 6c. Die Halteeinrichtung ist an einer Haltplatte 136 montiert, die insbesondere als Lagerelement dient, mit dem die gesamte Halteeinrichtung von der Robotereinrichtung auf den Trägersäulen 140 platziert und dort gelagert werden kann. Die Lagerungsposition kann zudem als Referenzposition verwendet werden, um die Position der Halteeinrichtung gegenüber der zweiten Messeinrichtung 120 in x-, y- und/oder z-Richtung zu kalibrieren. Die Verbindung der Halteeinrichtung 102 mit der Robotereinrichtung erfolgt über das Bajonett 137. Die Halteeinrichtung trägt einen Abwurfmotor 133 zum Abwerfen der Dispenserspitze 50, 50' durch Aktuierung der Klammerelemente 2c. Sie trägt ferner den Hubmotor 134, welcher der gezielten Auslenkung des Kolbens 59, 59' der Dispenserspitze dient. Der Betrieb dieser Komponenten wird über die Steuerelektronik auf der Platine 132 gesteuert, die wiederum über Anschlüsse 135 und Leitungen (nicht gezeigt) von der Steuereinrichtung des Laborautomaten steuerbar ist.

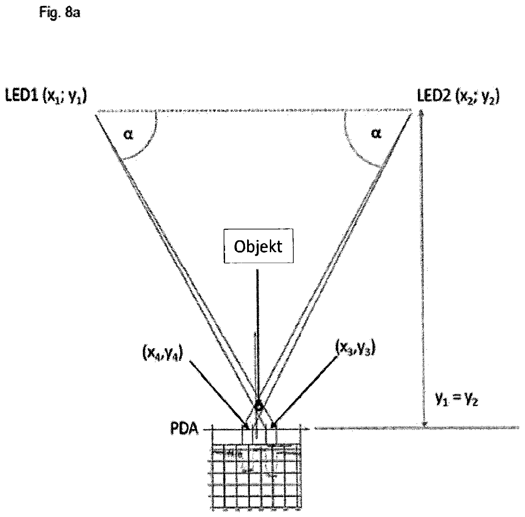

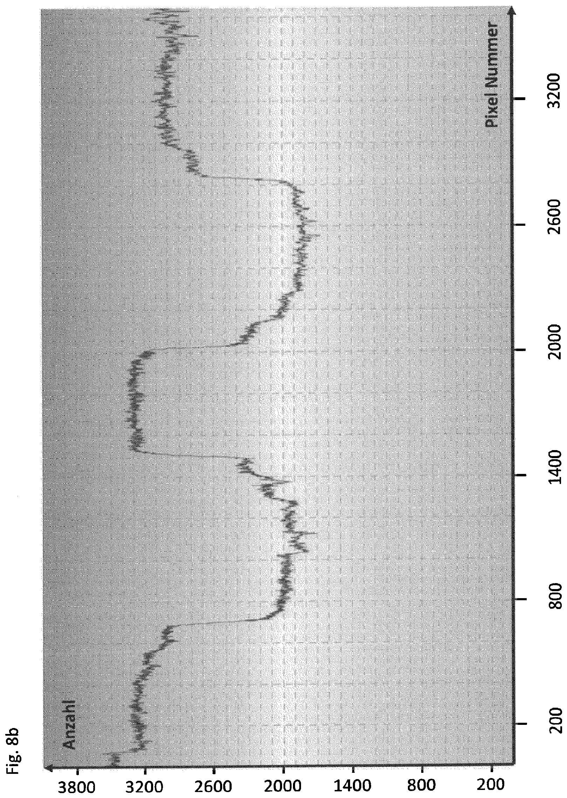

Die zweite Messeinrichtung 120 ist eine optische Messeinrichtung. Eine mögliche und bevorzugte Messkonfiguration zeigen Fig. 8a, 8b. Die zweite Messeinrichtung misst und referenziert die Position des Mündungsbereichs 56, 56' auf das Koordinatensystem des Laborautomaten. Die Position wird im Koordinatensystem eindeutig durch einen Referenzpunkt x,y,z bestimmt, der z.B. dem Zentrum der Spitze eines Referenzdornes entsprechen kann. Dieser Referenzdorn simuliert einen idealen Pipettierbehälter und ist auf seiner gesamten Länge perfekt symmetrisch zu seiner Längsachse A (*α* = 0°). Im Inneren des Gehäuses 121 der zweiten Messeinrichtung befindet sich mindestens eine Lichtquelle, die annähernd kollimiertes Licht aussendet, sowie ein Zeilensensor (linear PDA, z.B. CCD oder CMOS). Die Lichtquelle bzw. die Lichtquellen ist bzw. sind idealerweise Punktlichtquellen (IR-LEDs). Ist nur eine Lichtquelle realisiert, wird deren Licht mittels geeigneter optischer Komponenten zu gleichen Teilen aufgeteilt, so dass zwei gleichstarke Lichtquellen entstehen. Das Licht der Lichtquellen wird über Spiegel oder/und Strahlteiler so geführt, dass der zu messende Mündungsbereich 56, 56' von zwei Seiten im Winkel von etwa 60° beleuchtet wird. Durch die sich durchdringenden Lichtbündel, welche die Sensorzeile treffen wird ein Lichtvorhang gebildet, dessen Ebene senkrecht zur z-Achse steht.

Für die korrekte Bestimmung der Position eines sich im Lichtvorhang befindlichen Gegenstands ("Objekt", Fig. 8a) müssen die Abstände zwischen den Lichtquellen und die Orientierung sowie der Abstand zur Sensorzeile möglichst genau vorbekannt sein. Das System ist dabei so ausgelegt, dass das Verhältnis aus zu messendem Objektdurchmesser und der Entfernung LED-Sensorzeile groß ist und die Schattendurchmesser nicht wesentlich größer als der Messobjektdurchmesser sind. Ein diesen Lichtvorhang annähernd senkrecht durchstechender Endbereich 52 eines Pipettierbehälters (bzw. ein vergleichbar geformter Gegenstand) erzeugt dann auf der geeignet lang gewählten Sensorzeile zwei Schatten, wie dies in Fig. 8a illustriert ist und in Fig. 8b vergrößert als Messdiagramm dargestellt ist. Die Positionen dieser Schatten ändern sich, wenn das Messobjekt in der Ebene des Lichtvorhangs bewegt wird. Aus den bekannten Positionen der LEDs und den gemessenen Schattenmittelpunkten auf der Sensorzeile kann über einfache Trigonometrie der Schnittpunkt der Lichtbündel durch die Messobjektmitte, d.h. beispielsweise dem Mündungsbereich des Pipettierbehälters, und damit dessen Position im Koordinatensystem berechnet werden, da aus der Messeinrichtung 60 zugleich die genaue Lage des Messhilfsabschnitts bekannt ist. Nun kann die Relativposition des Mündungsabschnitts 56 von der Steuereinrichtung des Laborautomaten 100 in Bezug auf die Lage des Messhilfsabschnitts 54 erfasst und als Relativpositionsdaten in einem Datenspeicher des Laborautomaten gespeichert werden.

Wenn nun nachfolgend der Pipettierbehälter 50 aus einer dem Laborautomaten bekannten Lagerposition im Arbeitsraum gegriffen wird, kann durch einfache Messung der Lage, insbesondere der Drehstellung des Pipettierbehälters, die Position des Mündungsbereichs ermittelt werden. Durch die Information über die präzise Position des Mündungsbereichs können alle nachfolgenden programmgesteuerten Pipettier- bzw. Dispensiervorgänge durch präzise Positionierung des Mündungsbereichs 56, 56' gegenüber dem Probenbehältnis 99 sehr zuverlässig ausgeführt werden. Damit kann sowohl die Freistrahlabgabe als auch eine Wandabgabe sehr präzise durchgeführt werden. Weiterhin kann auch die genaue z-Position des Endes eines Messobjektes, beispielsweise des beschriebenen Mündungsbereiches 57, 57', bestimmt werden, wenn nämlich bei bekannter Position der Halteeinrichtung bzw. deren Auflagefläche, an der der Pipettierbehälter anliegt, die z-Position der Robotereinrichtung bestimmt wird, bei der das Messobjekt den Lichtvorhang von oben kommend berührt.

Fig. 7a zeigt die Freistrahlabgabe eines Strahls oder Tropfens 88 bei einem Pipettierbehälter 50, dessen zweiter Endabschnitt 52 und dessen Mündungsbereich 56 koaxial mit dem ersten Endabschnitt 51 angeordnet sind. Fig. 7b zeigt die Wandabgabe eines Flüssigkeitsvolumens 88 bei einem Pipettierbehälter 50', dessen zweiter Endabschnitt 52 und dessen Mündungsbereich 56 nicht koaxial mit dem ersten Endabschnitt 51 angeordnet sind. Vielmehr verläuft hier der Mündungsabschnitt 56' axial zu einer Achse B, die in einem Winkel α zur Achse A des ersten Endabschnitts ausgerichtet ist. Das resultiert in einem Abstand d der Fluidaustauschöffnung 57' von der Achse A, gemessen in der x-x-Ebene senkrecht zur Achse A. Der Pipettierbehälter ist durch die unterschiedliche Ausrichtung des ersten Endabschnitts und des Mündungsbereichs 56' besonders geeignet, um eine Flüssigkeit direkt an die Innenwand des Probenbehältnisses 99 abzugeben, wo die Flüssigkeit durch Adhäsion haftet bzw. zum Gefäßboden gleitet.

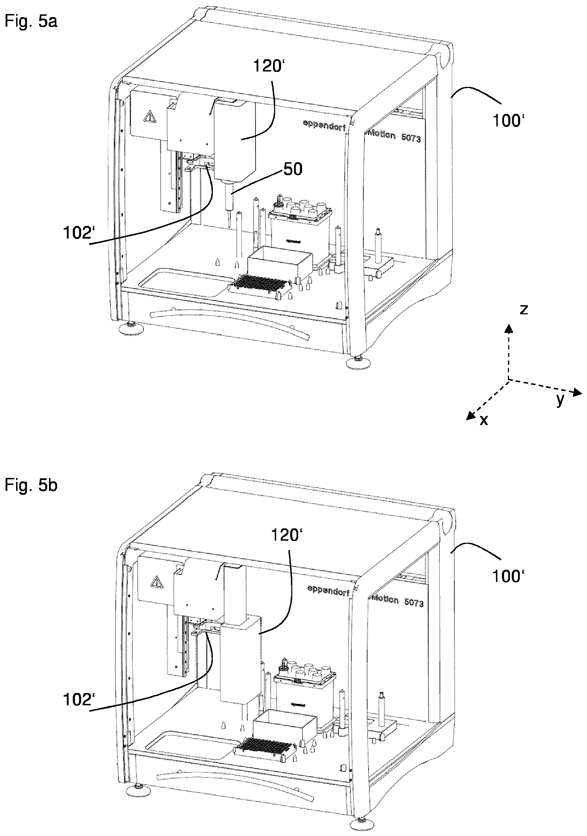

Die Figuren 5a und 5b zeigen eine bevorzugte Ausführungsform des Messapparats in einem Laborautomat 100'. Hier ist die zweite Messeinrichtung 120' direkt an der Halteeinrichtung 102' beweglich montiert, die Bewegung entlang der z-Achse ist durch die Steuereinrichtung des Laborautomaten steuerbar. Bei Bedarf kann die Messung der Position des Mündungsbereichs (und der Lagemessung) jederzeit durchgeführt werden, ohne dass die Position 120a im Arbeitsbereich angefahren werden muss. Figur 5a zeigt die Ausgangsposition der zweiten Messeinrichtung 120', Figur 5b zeigt eine Messposition, bei der die zweiten Messeinrichtung 120' den Pipettierbehälter 50 einrahmt.

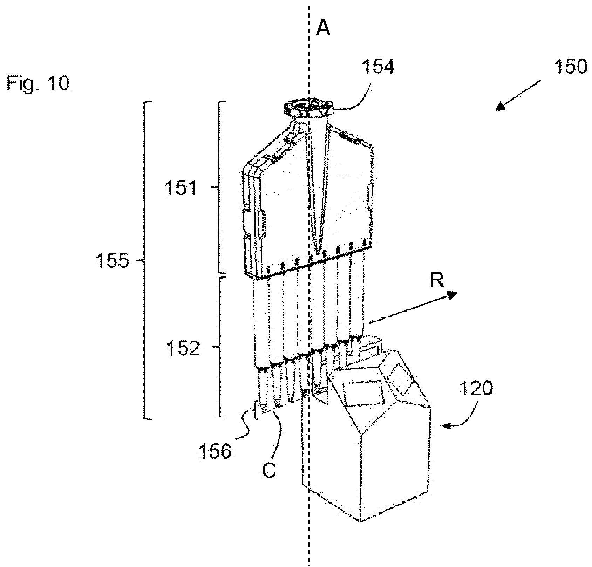

Figur 10 zeigt einen Mehrkanalpipettierbehälter 150, der an der zweiten Messeinrichtung 120 angeordnet ist, die bereits anhand der Figur 2 erläutert wurde und die in einem Laborautomaten 100 gemäß Fig. 4 angeordnet sein kann.

Der Mehrkanalpipettierbehälter 150 ist ein Mehrkanaldispensierbehälter bzw. eine Mehrkanalsprutze, wie sie insbesondere in der Patentanmeldung EP3260822A1 beschrieben wird. Der Mehrkanalpipettierbehälter 150 weist einen Gegenstandskörper 155 mit einem ersten Endabschnitt 151 und einem zweiten Endabschnitt 152 auf, wobei der erste Endabschnitt zur Verbindung des Mehrkanalpipettierbehälters mit dem Verbindungsabschnitt 131 der Halteeinrichtung 102 eingerichtet ist und einen Messhilfsabschnitt 154 aufweist, und wobei der zweite Endabschnitt einen Endbereich 156 aufweist. Der erste Endabschnitt 151 verläuft entlang einer Längsachse A, die zudem die Drehachse bildet, um welche der erste Endabschnitt am Verbindungsabschnitt 131 rotierbar ist. Über den Messhilfsabschnitt 154 lässt sich durch die Messung der ersten Messeinrichtung die Drehstellung des ersten Endabschnitts 151, insbesondere des dort vorgesehenen Verbindungsabschnitts, bzw. des Mehrkanalpipettierbehälters 150 um die Drehachse ermitteln.

Der Mehrkanaldispensierbehälter weist eine Mehrzahl M=8 von Behälterkörpern 152.1 ... 152.8 bzw. Spritzenzylindern 152.1 ... 152.8 auf, in denen jeweils ein Zylinderkolben angeordnet ist, um die flüssige Probe in den Behälterkörper zu aspirieren bzw. die flüssige Probe schrittweise oder im Ganzen durch Direktverdrängung wieder aus dem Behälterkörper abzugeben. Die acht Zylinderkolben sind fest gekoppelt, so dass sie von einem Laborautomaten programmgesteuert gleichzeitg bewegbar sind. Der zweite Endabschnitt 152 ist mehrgliedrig, er beinhaltet die acht Behälterkörper. Der Endbereich 156 des Mehrkanalpipettierbehälters 150 weist die Mehrzahl von acht Mündungsbereichen 156.1 ... 156.8 auf, deren Position als Position des Mittelpunktes der Mündungsöffnung eines Mündungsbereichs erfassbar ist.

Die im Falle des Mehrkanalpipettierbehälters 150 erfassten Relativpositionsdaten enthalten einen Mittelwert, der wie folgt erfasst wird:
Die Steuerungseinrichtung 3 des Messapparats ist hier dazu eingerichtet, den Endbereich 156 des Mehrkanalpipettierbehälters entlang einer horizontalen Bewegungsrichtung R, die übereinstimmt mit der Achse der Relativbewegung R zwischen Mehrkanalpipettierbehälter und zweiter Messeinrichtung, zu bewegen. Dabei wird nacheinander jeder Mündungsbereich 156.i (i=1....8) des Endbereichs 156 in den Messbereich des zwischen der Lichtquelle und dem Lichtsensor gelegenen Raumbereichs gefahren, der vom Lichtvorhang durchstrahlt wird, mittels dem eine Abschattung auf dem Lichtsensor erzeugt wird, die letztendlich gemessen wird.

Im vorliegenden Beispiel der Messung an dem Mehrkanalpipettierbehälter 150 wird davon ausgegangen, dass der Steuereinrichtung 3 die Relativposition der Längsachsen A1 ... A8 der Behälterkörper in Bezug auf den Messhilfsabschnitt genau bekannt ist. Die Längsachsen A1 ... A8 können insbesondere im Wesentlichen parallel, insbesondere parallel zu der Längsachse A des Mehrkanalpipettierbehälters 150 verlaufen, die insbesondere die Drehachse ist, in Bezug auf welche der erste Endabschnitt 151 eien Drehstellung relativ zur Halteeinrichtung einnimmt. Es ist aber auch möglich, die Relativposition der Längsachsen A1 ... A8 (Ai) der Behälterkörper in Bezug auf den Messhilfsabschnitt ebenfalls mit der zweiten Messeinrichtung zu messen.

Der Messapparat ist hier dazu eingerichtet, mittels der zweiten Messeinrichtung 120 die Positionen der mehreren Mündungsbereiche 156.i, insbesondere aller Mündungsbereiche 156.i, des Endbereichs 156 in Bezug auf den Messhilfsabschnitt 154 zu erfassen bzw. zu messen. Der Messapparat weist eine Auswertungseinrichtung auf, um die Messung der Positionen der mehreren Mündungsbereiche 156.i auszuwerten, insbesondere um aus den erfassten Positionen der mehreren Mündungsbereiche die Relativpositionsdaten zu ermitteln. Die Auswertungseinrichtung ist dazu eingerichtet, aus den erfassten Positionen (xi, yi) der mehreren Mündungsbereiche 156.i einen statistischen Wert abzuleiten, der die Relativpositionsdaten definiert. Dieser statistische Wert kann insbesondere ein Mittelwert sein, oder vorzugsweise ein Bereichsmittelwert. Die Positionsmessung eines Mündungsbereichs beinhaltet, dass die Position (xi, yi) des Mündungsbereichs 156.i in einer Ebene -bzw. die Position der Projektion des Mündungsbereichs entlang der Achse A auf diese Ebene- bestimmt wird, die senkrecht zu den Längsachsen Ai des Behälterkörpers und durch die Gerade C verläuft, auf der die einzelnen Längsachsen Ai der Behälterkörper 152.i des Mehrkanalpipettierbehälters 150 aufgereiht sind. Die Position eines Mündungsbereichs wird als Punkt (xi, yi) eines kartesischen Koordinatensystems Ki angegeben, dessen Ursprung insbesondere die Lage der Längsachse Ai in dieser Ebene ist und dessen x-Achse die Gerade C ist. Die zu speichernden Relativpositionsdaten könnten dann einen Mittelwertspunkt (M_x, M_y) beinhalten, der sich bestimmt aus dem Mittelwert M_x der xi-Werte und dem Mittelwert M_y der yi-Werte der betrachteten Positionen (xi, yi) der Mündungsbereiche, wobei jede der Positionen (xi, yi) jeweils mit Bezug auf die zum jeweiligen Behälterkörper gehörenden Längsachse Ai definiert ist, die den Ursprung des jeweiligen Koordinatensystems bestimmt. Diese Mittelwertsgröße kann auch als ein Bereichsmittelwert (W_x, W_y) definiert sein, wobei W_x definiert ist als der arithmetische Mittelwert aus dem größten Wert xi_max und dem kleinsten Wert xi_min aller Werte xi, also W_x = (xi_max - xi_min)/2 und wobei W_y definiert ist als der arithmetische Mittelwert aus dem größten Wert yi_max und dem kleinsten Wert yi_min aller Werte yi, also W_y = (yi_max - yi_min)/2.

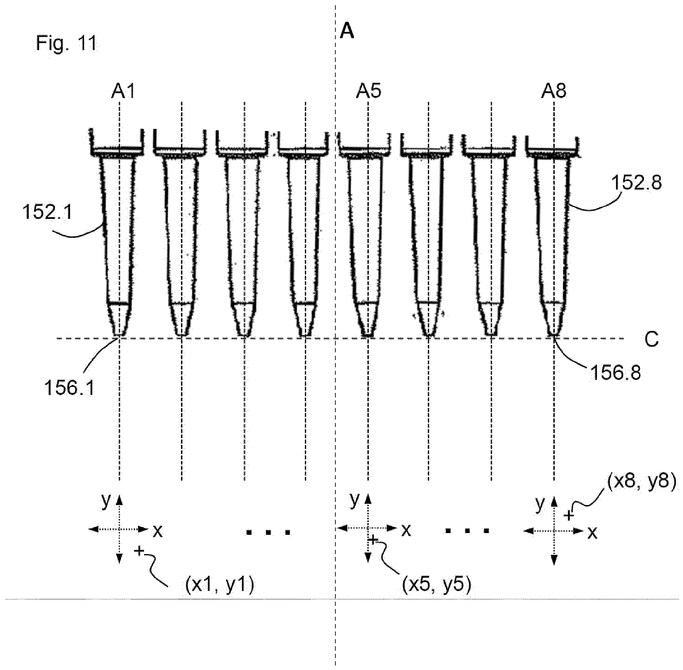

Die Positionsmessung lässt sich anhand der Fig. 11 nachvollziehen. In einem ersten Koordinatensystem K1 (ganz links unten) ist der Positionswert (x1, y1) des ersten Mündungsbereichs 156.1 eingetragen, der vom Idealfall abweicht, der gegeben wäre, wenn der Positionswert mit dem Ursprung übereinstimmt, also auf der Längsachse A1 des zugehörigen Behälterkörpers 152.1 gelegen wäre. In dem weiteren gezeigten Koordinatensystem K5 (Mitte) ist der Positionswert (x5, y5) des fünften Mündungsbereichs 156.5 eingetragen, der auch vom Idealfall abweicht, der gegeben wäre, wenn der Positionswert mit dem Ursprung übereinstimmt, also auf der Längsachse A5 des zugehörigen Behälterkörpers gelegen wäre. In dem weiteren Koordinatensystem K8 (ganz rechts unten) ist der Positionswert (x8, y8) des achten Mündungsbereichs 156.8 eingetragen, der auch vom Idealfall abweicht, der gegeben wäre, wenn der Positionswert mit dem Ursprung übereinstimmt, also auf der Längsachse A8 des zugehörigen Behälterkörpers gelegen wäre. Im Beispiel werden alle acht Positionswerte (xi, yi) gemessen (hier: sukzessive, alternativ: gleichzeitig) und ausgewertet. Betrachtet man nur die hier gezeigten drei Positionswerte (x1, y1) , (x5, y5) und (x8, y8), dann weicht der Mittelwert (M_x, M_y) vom Bereichsmittelwert (W_x, W_y) ab, da W_y etwa Null ist (W_y=0), während M_y von Null abweicht. Geht man davon aus, dass hier die beiden in Bezug auf die y-Achse des Koordinatensystems gelegenen Außenwerte bzw. Extrempositionen der Mündungsbereiche 156.i die Werte y1 und y8 sind, dann bietet die Erfassung des Bereichsmittelwerts W_y (und analog W_x) die größte Sicherheit, bei einer Positionierung des Mehrkanalpipettierbehälters 150 über einer Reihe von Probenaufnahmen eines Mehrfachprobenbehälters - wobei diese Positionierung die Relativpositionsdaten zur Lagekorrektur der Halteeinrichtung bzw. des Mehrkanalpipettierbehälters 150 verwendet - jeden Mündungsbereich 156.i innerhalb des zugeordneten Probenbehälters zu platzieren. Sind aber die Abweichungen der Positionen 156.i von der Längsachse hinreichend klein, kann man davon ausgehen, dass eine Korrektur nicht zwingend erforderlich ist, um die Probenaufnahmen "zu treffen" und dass auch ohne Positionskorrektur jeder Mündungsbereich innerhalb einer Probenaufnahme liegt. Die Erfassung des Mittelwerts M_y (und analog M_x) bietet dann die größte durchschnittliche Genauigkeit, bei einer Positionierung des Mehrkanalpipettierbehälters 150 über einer Reihe von Probenaufnahmen eines Mehrfachprobenbehälters die Mündungsbereiche 156.i möglichst nahe der Mittelpunkte der Probenaufnahmen zu platzieren, um zum Beispiel möglichst eine Wandabgabe zu verhindern.

Ist die Einzelabweichung eines oder mehrerer der Mündungsbereiche 156.i von ihrer Achse Ai zu groß, als dass für den gesamten Mehrkanalpipettierbehälter eine Position gefunden werden kann, damit bei gleichzeitigem Flüssigkeitstransfer noch alle Zielgefäße getroffen werden können, kann der Laborautomat so eingerichtet sein, dass automatisch eine Neuaufnahme des Behälters durchgeführt wird oder die Benutzung des Mehrkanalbehälters abgebrochen wird.

## Patentansprüche

1. Messapparat (1) für einen Liquid-Handling-Laborautomaten zur Erfassung der Relativposition eines Endabschnitts eines vom Laborautomaten automatisiert bewegbaren Pipettierbehälters (50; 50'), welcher teilweise oder vollständig aus Kunststoff besteht und welcher der Aufnahme einer fluiden Laborprobe mittels Ansaugen in den Pipettierbehälter und/oder der Abgabe der fluiden Laborprobe dient, aufweisend:
eine Halteeinrichtung (2) zum Halten des bewegbaren Pipettierbehälters (50; 50'), der einen röhrenförmigen Behälterkörper (55; 55') mit einem ersten Endabschnitt (51; 51') und einem zweiten Endabschnitt (52; 52') aufweist, wobei der erste Endabschnitt zur Verbindung des Pipettierbehälters mit der Halteeinrichtung eingerichtet ist und einen Messhilfsabschnitt (54; 54') aufweist, und wobei der zweite Endabschnitt einen als Mündungsbereich ausgebildeten Endbereich (56; 56') mit einer Fluidaustauschöffnung aufweist,
eine elektronische Steuereinrichtung (3) mit einer Datenspeichereinrichtung (5) zum Speichern von Daten,
**gekennzeichnet dadurch, dass**
der Messapparat eine erste Messeinrichtung (10; 60) aufweist, die zur Messung einer Lage, insbesondere einer Drehstellung, des Messhilfsabschnitts des Pipettierbehälters an der Halteeinrichtung eingerichtet ist,
und eine zweite Messeinrichtung (20; 120; 120') aufweist, die zur Messung der Position des Mündungsbereichs des Pipettierbehälters eingerichtet ist,
und der Messapparat dazu eingerichtet ist, die Position des Mündungsbereichs in Abhängigkeit von der Lage des Messhilfsabschnitts als Relativpositionsdaten in der Datenspeichereinrichtung zu speichern, so dass nachfolgend die Position des Mündungsbereichs des Pipettierbehälters durch Messung der Lage des Messhilfsabschnitts und aus den Relativpositionsdaten ermittelbar ist.

2. Messapparat gemäß Anspruch 1, wobei dieser eine Basis (6; 110) aufweist, auf der die zweite Messeinrichtung (20; 120) platziert ist, wobei die erste Messeinrichtung ein Bestandteil der Halteeinrichtung (2) ist, die an der Basis beweglich gelagert ist.

3. Messapparat gemäß Anspruch 1, wobei die erste Messeinrichtung und die zweite Messeinrichtung an der Halteeinrichtung (2) angebracht sind, die an einer Basis (6; 110) des Messapparats beweglich gelagert ist.

4. Messapparat gemäß Anspruch 1, wobei die zweite Messeinrichtung (20; 120; 120') einen Messraum, mindestens eine Lichtquelle und mindestens einen Lichtsensor aufweist, um die Position des im Messraum angeordneten Endbereichs (56; 56') des Gegenstands zu messen.

5. Messapparat gemäß Anspruch 4, wobei der Lichtsensor ein Zeilensensor ist.

6. Messapparat gemäß Anspruch 4 oder 5, wobei der Lichtsensor für eine ortsaufgelöste Messung eingerichtet ist, um die Abschattung des Lichtsensors ortsaufgelöst zu erfassen, die entsteht, wenn der Gegenstand im Messraum in den Strahlengang zwischen der Lichtquelle und dem Lichtsensor eingebracht wird.

7. Messapparat gemäß einem der vorangehenden Ansprüche, wobei die erste Messeinrichtung (10) zur Messung einer Drehstellung des Messhilfsabschnitts des Pipettierbehälters an der Halteeinrichtung eingerichtet ist.

8. Liquid-Handling-Laborautomat zur programmgesteuerten Behandlung von mindestens einer fluiden Laborprobe (10), der den Messapparat gemäß einem der vorangehenden Ansprüche aufweist.

9. Verfahren (200) zur Erfassung der Relativposition eines als Mündungsbereichs ausgebildeten Endbereichs (56; 56') eines Pipettierbehälters (50; 50`), welcher teilweise oder vollständig aus Kunststoff besteht und welcher der Aufnahme einer fluiden Laborprobe mittels Ansaugen in den Pipettierbehälter und/oder der Abgabe der fluiden Laborprobe dient und der einen röhrenförmigen Behälterkörper (55; 55') mit einem ersten (51; 51') und einem zweiten (52; 52') Endabschnitt aufweist, wobei der erste Endabschnitt zur Verbindung des Pipettierbehälters mit einer Halteeinrichtung (2; 102; 102') eingerichtet ist und einen Messhilfsabschnitt (54; 54') aufweist, wobei der zweite Endabschnitt den Mündungsbereich (56; 56') aufweist, aufweisend die Schritte
• Messen einer Lage, insbesondere einer Drehstellung, des Messhilfsabschnitts des an einer Halteeinrichtung angeordneten Pipettierbehälters mittels einer ersten Messeinrichtung; (201)
• Messen der Position des Mündungsbereichs des an der Halteeinrichtung angeordneten Pipettierbehälters mittels einer zweiten Messeinrichtung; (202)
• Speichern der Position des Mündungsbereichs in Abhängigkeit von der Lage des Messhilfsabschnitts als Relativpositionsdaten in einer Datenspeichereinrichtung, so dass nachfolgend die Position des Mündungsbereichs des vermessenen Pipettierbehälters durch Messung der Lage seines Messhilfsabschnitts und aus den Relativpositionsdaten ermittelbar ist. (203)

10. Verfahren gemäß Anspruch 9, das die Schritte aufweist:
• Ablegen des vermessenen Pipettierbehälters (50; 50') in einer Lagerposition; (204)
• Erneutes Ergreifen des vermessenen Pipettierbehälters (50; 50') aus der Lagerposition und Verbinden des Pipettierbehälters mit der Halteeinrichtung in einer aktuellen Lage, die von der Lage des Pipettierbehälters bei dessen Vermessung abweicht, so dass auch die Position des Endbereichs von der Position bei dessen Messung abweicht; (205)
• Messen der aktuellen Lage des vermessenen Pipettierbehälters (50; 50') durch Messung der Lage seines Messhilfsabschnitts (54; 54') gegenüber der Halteeinrichtung (206);
• Ermitteln der Position des Mündungsbereichs des vermessenen Pipettierbehälters aus der aktuellen Lage seines Messhilfsabschnitts und aus den gespeicherten Relativpositionsdaten (207).

## Claims

1. Measuring apparatus (1) for an automatic liquid-handling laboratory apparatus for detecting the relative position of an end section of a pipetting container (50; 50') which can be moved automatically by the automatic laboratory apparatus, which consists partly or completely of plastic and which serves to hold a fluid laboratory sample by means of suction into the pipetting container and/or to dispense the fluid laboratory sample, having
a holding device (2) for holding the movable pipetting container (50; 50), which comprises a tubular container body (55; 55') with a first end section (51; 51') and a second end section (52; 52'), wherein the first end section is configured to connect the pipetting container to the holding device and comprises an auxiliary measuring section (54; 54'), and wherein the second end section comprises an end portion (56; 56') configured as a mouth region with a fluid exchange opening, an electronic control device (3) with a data storage device (5) for storing data,
**characterized in that**
the measuring apparatus comprises a first measuring device (10; 60) which is set up to measure a position, in particular a rotational position, of the auxiliary measuring section of the pipetting container on the holding device,
and a second measuring device (20; 120; 120') which is configured to measure the position of the mouth region of the pipetting container,
and the measuring apparatus is configured to store the position of the mouth region as a function of the position of the auxiliary measuring section as relative position data in the data storage device, so that the position of the mouth region of the pipetting container is subsequently determinable by measuring the position of the auxiliary measuring section and from the relative position data.

2. Measuring apparatus according to claim 1, wherein the measuring apparatus comprises a base (6; 110) on which the second measuring device (20; 120) is placed, wherein the first measuring device is a component of the holding device (2), which is movably mounted on the base.

3. Measuring apparatus according to claim 1, wherein the first measuring device and the second measuring device are attached to the holding device (2), which is movably mounted on a base (6; 110) of the measuring apparatus.

4. Measuring apparatus according to claim 1, wherein the second measuring device (20; 120; 120') comprises a measuring chamber, at least one light source and at least one light sensor to measure the position of the end portion (56; 56') of the object arranged in the measuring chamber.

5. Measuring apparatus according to claim 4, wherein the light sensor is a line sensor.

6. Measuring apparatus according to claim 4 or 5, wherein the light sensor is set up for a spatially resolved measurement in order to detect the shading of the light sensor in a spatially resolved manner, which occurs when the object in the measuring space is brought into the beam path between the light source and the light sensor.

7. Measuring apparatus according to one of the preceding claims, wherein the first measuring device (10) is configured to measure a rotational position of the auxiliary measuring section of the pipetting container on the holding device.

8. Liquid handling laboratory apparatus for the program-controlled treatment of at least one fluid laboratory sample (10), comprising the measuring apparatus according to one of the preceding claims.

9. Method (200) for detecting the relative position of an end region (56; 56') of a pipetting container (50; 50') which is configured as a mouth region, which consists partly or completely of plastic and which serves to receive a fluid laboratory sample by means of suction into the pipetting container and/or to dispense the fluid laboratory sample and which comprises a tubular container body (55; 55') with a first (51; 51') and a second (52; 52') end section, the first end section being configured for connecting the pipetting container to a holding device (2; 102; 102') and having a measuring auxiliary section (54; 54'), the second end section comprising the mouth region (56; 56'), comprising the steps of
- measuring a position, in particular a rotational position, of the auxiliary measuring section of the pipetting container arranged on a holding device by means of a first measuring device; (201)
- measuring the position of the mouth region of the pipetting container arranged on the holding device by means of a second measuring device; (202)
- storing the position of the mouth region as a function of the position of the auxiliary measuring section as relative position data in a data storage device, so that the position of the mouth region of the measured pipetting container can subsequently be determined (203) by measuring the position of its auxiliary measuring section and from the relative position data.

10. Method according to claim 9, comprising the steps of
- depositing the measured pipetting container (50; 50') in a storage position; (204)
- grasping the measured pipetting container (50; 50') again from the storage position and connecting the pipetting container to the holding device in a current position which differs from the position of the pipetting container when it was measured, so that the position of the end region also differs from the position when it was measured; (205)
- measuring the current position of the measured pipetting container (50; 50') by measuring the position of its auxiliary measuring section (54; 54') relative to the holding device; (206)
- determining the position of the mouth region of the measured pipetting container from the current position of its auxiliary measuring section and from the stored relative position data; (207).

## Revendications

1. Appareil de mesure (1) pour un automate de laboratoire de manipulation de liquide pour l'acquisition de la position relative d'une partie d'extrémité d'un récipient de pipettage (50 ; 50') pouvant être déplacé de façon automatisée par l'automate de laboratoire, lequel est constitué en partie ou entièrement de matière plastique et lequel sert à recevoir un échantillon de laboratoire fluide par aspiration dans le récipient de pipettage et/ou à distribuer l'échantillon de laboratoire fluide, comprenant :
un dispositif de retenue (2) pour retenir le récipient de pipettage (50 ; 50') mobile, qui comporte un corps de récipient (55 ; 55') tubulaire avec une première partie d'extrémité (51 ; 51') et une deuxième partie d'extrémité (52 ; 52'), dans lequel la première partie d'extrémité est configurée pour relier le récipient de pipettage au dispositif de retenue et comporte une partie auxiliaire de mesure (54 ; 54'), et dans lequel la deuxième partie d'extrémité comporte une zone d'extrémité (56 ; 56') réalisée sous la forme d'une zone d'embouchure avec une ouverture d'échange de fluide,
un dispositif de commande électronique (3) avec un dispositif de mise en mémoire de données (5) pour la mise en mémoire de données,
**caractérisé en ce que**
l'appareil de mesure comprend un premier dispositif de mesure (10 ; 60), qui est configuré pour mesurer une situation, en particulier une pose rotative, de la partie auxiliaire de mesure du récipient de pipettage sur le dispositif de retenue,
et comprend un deuxième dispositif de mesure (20 ; 120 ; 120'), qui est configuré pour mesurer la position de la zone d'embouchure du récipient de pipettage,
et l'appareil de mesure est configuré pour mettre en mémoire la position de la zone d'embouchure en fonction de la situation de la partie auxiliaire de mesure en tant que données de position relative dans le dispositif de mise en mémoire de données, de sorte qu'ensuite la position de la zone d'embouchure du récipient de pipettage peut être déterminée par mesure de la situation de la partie auxiliaire de mesure et à partir des données de position relative.

2. Appareil de mesure selon la revendication 1, lequel comprend une base (6 ; 110), sur laquelle le deuxième dispositif de mesure (20 ; 120) est placé, dans lequel le premier dispositif de mesure est un composant du dispositif de retenue (2), qui est monté mobile sur la base.

3. Appareil de mesure selon la revendication 1, dans lequel le premier dispositif de mesure et le deuxième dispositif de mesure sont fixés sur le dispositif de retenue (2), qui est monté mobile sur une base (6 ; 110) de l'appareil de mesure.

4. Appareil de mesure selon la revendication 1, dans lequel le deuxième dispositif de mesure (20 ; 120 ; 120') comporte un espace de mesure, au moins une source de lumière et au moins un capteur de lumière, afin de mesurer la position de la zone d'extrémité (56 ; 56') de l'objet disposée dans l'espace de mesure.

5. Appareil de mesure selon la revendication 4, dans lequel le capteur de lumière est un capteur linéaire.

6. Appareil de mesure selon la revendication 4 ou 5, dans lequel le capteur de lumière est configuré pour une mesure à résolution spatiale, afin d'acquérir l'obscurcissement du capteur de lumière avec une résolution spatiale, qui se produit lorsque l'objet est introduit dans l'espace de mesure dans le chemin optique entre la source de lumière et le capteur de lumière.

7. Appareil de mesure selon l'une quelconque des revendications précédentes, dans lequel le premier dispositif de mesure (10) est configuré pour mesurer une pose rotative de la partie auxiliaire de mesure du récipient de pipettage sur le dispositif de retenue.

8. Automate de laboratoire de manipulation de liquide pour le traitement commandé par programme d'au moins un échantillon de laboratoire (10) fluide, qui comporte l'appareil de mesure selon l'une quelconque des revendications précédentes.

9. Procédé (200) pour l'acquisition de la position relative d'une zone d'extrémité (56 ; 56') d'un récipient de pipettage (50 ; 50') réalisé sous la forme d'une zone d'embouchure, lequel est constitué en partie ou entièrement de matière plastique et lequel sert à recevoir un échantillon de laboratoire fluide par aspiration dans le récipient de pipettage et/ou à distribuer l'échantillon de laboratoire fluide et qui comporte un corps de récipient (55 ; 55') tubulaire avec une première (51; 51') et une deuxième (52 ; 52') partie d'extrémité, dans lequel la première partie d'extrémité est configurée pour relier le récipient de pipettage à un dispositif de retenue (2 ; 102 ; 102') et comporte une partie auxiliaire de mesure (54 ; 54'), dans lequel la deuxième partie d'extrémité comporte la zone d'embouchure (56 ; 56'), comprenant les étapes
• de mesure d'une situation, en particulier d'une pose rotative, de la partie auxiliaire de mesure du récipient de pipettage disposé sur un dispositif de retenue au moyen d'un premier dispositif de mesure ; (201)
• de mesure de la position de la zone d'embouchure du récipient de pipettage disposé sur le dispositif de retenue au moyen d'un deuxième dispositif de mesure ; (202)
• de mise en mémoire de la position de la zone d'embouchure en fonction de la situation de la partie auxiliaire de mesure en tant que données de position relative dans un dispositif de mise en mémoire de données, de sorte qu'ensuite la position de la zone d'embouchure du récipient de pipettage mesuré peut être déterminée par mesure de la situation de sa partie auxiliaire de mesure et à partir des données de position relative.

10. Procédé selon la revendication 9, qui comprend les étapes :
• de dépose du récipient de pipettage (50 ; 50') mesuré dans une position de stockage ; (204)
• à nouveau de saisie du récipient de pipettage (50 ; 50') mesuré à partir de la position de stockage et de liaison du récipient de pipettage au dispositif de retenue dans une situation actuelle, qui diffère de la situation du récipient de pipettage lors de la mesure de celui-ci, de sorte que la position de la zone d'extrémité diffère également de la position lors de la mesure de celle-ci ; (205)
• de mesure de la situation actuelle du récipient de pipettage (50 ; 50') mesuré par mesure de la situation de sa partie auxiliaire de mesure (54 ; 54') par rapport au dispositif de retenue (206) ;
• de détermination de la position de la zone d'embouchure du récipient de pipettage mesuré à partir de la situation actuelle de sa partie auxiliaire de mesure et à partir des données de position relative (207) mises en mémoire.
